# EUROPEAN PATENT APPLICATION

(11) **EP 4 838 393 A1**
(43) Date of publication of application: **11.11.2026**
(21) Application number: 25850265.7
(22) Date of filing: 30.06.2025
(51) Int. Cl.: G06F 21/53, G06F 21/60, H04L 9/40

(54) **DATA PROCESSING METHOD AND APPARATUS, AND DEVICE AND STORAGE MEDIUM**

(30) Priority: 05.08.2024 CN 202411063834
(71) Applicant: Tencent Technology (Shenzhen) Company Limited, Shenzhen, Guangdong 518057 (CN)
(72) Inventor: RAO, Huaming, Shenzhen, Guangdong 518057 (CN); JIANG, Jie, Shenzhen, Guangdong 518057 (CN); LIU, Yuhong, Shenzhen, Guangdong 518057 (CN); CHEN, Peng, Shenzhen, Guangdong 518057 (CN); ZHANG, Fan, Shenzhen, Guangdong 518057 (CN); LIN, Qingquan, Shenzhen, Guangdong 518057 (CN); YANG, Xiaofeng, Shenzhen, Guangdong 518057 (CN)
(74) Representative: EP&C
(86) International application number: PCT/CN2025/106153
(87) International publication number: WO 2026/031899

(57) **Abstract**

The embodiments of the present application are applied to the technical field of cloud security. Disclosed are a data processing method and apparatus, and a device and a storage medium. The method comprises: by means of a proxy component in a trusted execution environment, receiving a computation task request sent by a first device; by means of the proxy component, acquiring first encrypted service data from a second device on the basis of a first data identifier, and decrypting the first encrypted service data to obtain first service data; by means of a computation task component, executing a computation operation on the first service data on the basis of an execution file, so as to obtain computation results; and by means of the proxy component, performing aggregation and encryption on the computation results, so as to obtain an encrypted result. The present application can enhance the convenience of the circulation process of service data and improve the circulation efficiency of the service data .

## Description

### RELATED APPLICATION

This disclosure claims priority to Chinese Patent Application No. 202411063834.7, filed with the China National Intellectual Property Administration on August 5, 2024 and entitled "DATA PROCESSING METHOD AND APPARATUS, DEVICE, AND STORAGE MEDIUM".

### FIELD OF THE TECHNOLOGY

This disclosure relates to the field of Internet technologies, etc., and in particular, to a data processing method and apparatus, a device, and a storage medium.

### BACKGROUND OF THE DISCLOSURE

As service data gains global recognition as new production factors and resources, countries worldwide are accelerating efforts regarding high-level design, legal and regulatory frameworks, cross-border flows, and platform construction for service data circulation. In terms of high-level design, continuous global efforts have been made in strategic planning and policy formulation. On the market front, it is urgent to construct a secure and trustworthy service data circulation platform to unlock the value of data. The service data circulation platform can assist multiple service parties in implementing circulation (e.g., data access/invocation) of service data while ensuring security of the service data.

Currently, the service data circulation platform ensures security of service data in a closed-domain manner. Specifically, an independent cluster must be created for each service party to process its service data and store the service data and computation results of the service data. In addition, when a service party needs to invoke data from a cluster of another service party, the invocation requires manual approval, and must be implemented by authorized personnel operating a jump server (a cyber-security device or a computer device) configured with a specified permission. Evidently, the service data circulation process in the closed-domain manner is complex, resulting in low circulation efficiency of the service data.

### SUMMARY

Embodiments of this disclosure provide a data processing method and apparatus, a device, and a storage medium, to facilitate a service data circulation process and improve service data circulation efficiency.

An aspect of embodiments of this disclosure provides a data processing method, including:
receiving, via an agent component running in a trusted execution environment comprised in the computer device, a computation task request transmitted by a first device, the computation task request comprising an executable file and a first data identifier of first encrypted service data, the executable file being used for executing a computing operation on first service data in a second device, and the first encrypted service data being obtained according to the first service data;
obtaining, via the agent component and according to the first data identifier, the first encrypted service data from the second device, and decrypting the first encrypted service data to obtain the first service data;
executing, via a computation task component running in the trusted execution environment, the computing operation on the first service data according to the executable file, to obtain a computation result; and
performing, via the agent component, aggregate encryption on the computation result according to a first public key of the first device and a second public key of the second device, to obtain an encrypted result and transmit the encrypted result to the first device and the second device, so that the first device and the second device perform aggregate decryption on the encrypted result to obtain the computation result.

An aspect of embodiments of this disclosure provides a data processing method, executable by a first device, including:
transmitting a computation task request to an agent component, the computation task request comprising an executable file and a first data identifier of first encrypted service data, the executable file being used for executing a computing operation on first service data in a second device, the first encrypted service data being obtained according to the first service data, and the agent component running in a trusted execution environment comprised in a third device and being configured to obtain the first encrypted service data from the second device according to the first data identifier, and decrypt the first encrypted service data to obtain the first service data;
receiving an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
performing aggregate decryption on the encrypted result with the second device to obtain the computation result.

An aspect of embodiments of this disclosure provides a data processing method, executable by a second device, including:
transmitting, according to a first data identifier carried in a computation task request, first encrypted service data to an agent component, the computation task request being transmitted from a first device to the agent component, the computation task request comprising an executable file and the first data identifier of the first encrypted service data, the executable file being used for executing a computing operation on first service data in the second device, the first encrypted service data being obtained according to the first service data, and the agent component running in a trusted execution environment comprised in a third device and being configured to decrypt the first encrypted service data to obtain the first service data;
receiving an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
performing aggregate decryption on the encrypted result with the first device to obtain the computation result.

An aspect of embodiments of this disclosure provides a data processing apparatus, including:
a receiving module, configured to receive, via an agent component running in a trusted execution environment comprised in the computer device, a computation task request transmitted by a first device, the computation task request comprising an executable file and a first data identifier of first encrypted service data, the executable file being used for executing a computing operation on first service data in a second device, and the first encrypted service data being obtained according to the first service data;
a decryption module, configured to obtain, via the agent component and according to the first data identifier, the first encrypted service data from the second device, and decrypt the first encrypted service data to obtain the first service data;
an execution module, configured to execute, via a computation task component running in the trusted execution environment, the computing operation on the first service data according to the executable file, to obtain a computation result; and
an encryption module, configured to perform, via the agent component, aggregate encryption on the computation result according to a first public key of the first device and a second public key of the second device, to obtain an encrypted result and transmit the encrypted result to the first device and the second device, so that the first device and the second device perform aggregate decryption on the encrypted result to obtain the computation result.

An aspect of embodiments of this disclosure provides a data processing apparatus, deployed in a first device, including:
a transmitting module, configured to transmit a computation task request to an agent component, the computation task request comprising an executable file and a first data identifier of first encrypted service data, the executable file being used for executing a computing operation on first service data in a second device, the first encrypted service data being obtained according to the first service data, and the agent component running in a trusted execution environment comprised in a third device and being configured to obtain the first encrypted service data from the second device according to the first data identifier, and decrypt the first encrypted service data to obtain the first service data;
a receiving module, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module, configured to perform aggregate decryption on the encrypted result with the second device to obtain the computation result.

An aspect of embodiments of this disclosure provides a data processing apparatus, deployed in a second device, including:
a transmitting module, configured to transmit, according to a first data identifier carried in a computation task request, first encrypted service data to an agent component, the computation task request being transmitted from a first device to the agent component, the computation task request comprising an executable file and the first data identifier of the first encrypted service data, the executable file being used for executing a computing operation on first service data in the second device, the first encrypted service data being obtained according to the first service data, and the agent component running in a trusted execution environment comprised in a third device and being configured to decrypt the first encrypted service data to obtain the first service data;
a receiving module, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module, configured to perform aggregate decryption on the encrypted result with the first device to obtain the computation result.

An aspect of embodiments of this disclosure provides a computer device, including a memory and a processor, the memory having a computer program stored therein, and the processor, when executing the computer program, implementing operations of the foregoing method.

An aspect of embodiments of this disclosure provides a computer-readable storage medium, having a computer program stored therein, the computer program, when executed by a processor, implementing operations of the foregoing method.

An aspect of embodiments of this disclosure provides a computer program product, including a computer program, the computer program, when executed by a processor, implementing operations of the foregoing method.

This disclosure has at least the following beneficial effects: (1) An agent component and a computation task component are deployed in a trusted execution environment of a trusted third party corresponding to service parties, and decryption and computing processes of first encrypted service data are both implemented by using the agent component and the computation task component in the trusted execution environment. Therefore, service data of the service parties is circulated through the trusted execution environment without creating an independent cluster for each service party or relying on dedicated hardware, which reduces service data circulation costs and facilitates a service data circulation process. In addition, the circulation process does not require manual participation, which improves service data circulation efficiency. (2) Aggregate encryption is performed on a computation result, so that a second service party transmits a second partial decrypted result obtained by the second service party to a first service party only when determining that original data (i.e., service data) is unable to be restored based on an executable file. In this way, the first service party can perform aggregate decryption on an encrypted result based on a first partial decrypted result obtained by the first service party and the received second partial decrypted result, to obtain the computation result. This can ensure joint ownership of the computation result by the first service party and the second service party, ensure that the computation result is secure and controllable, and improve security of the computation result. The service data circulation herein may mean that the computation result of the first service data is transmitted to the first service party. To be specific, the first service party invokes the first service data through the trusted third party, so that the service data is circulated.

### BRIEF DESCRIPTION OF THE DRAWINGS

To describe technical solutions in embodiments of this disclosure or the related art more clearly, the following briefly describes accompanying drawings required for describing the embodiments or the related art. It is clear that the accompanying drawings in the following descriptions show only some embodiments of this disclosure, and a person of ordinary skill in the art may still derive other drawings from these accompanying drawings without creative efforts.
FIG. 1 is a schematic diagram of a data processing system according to this disclosure.
FIG. 2 is a schematic diagram of another data processing system according to this disclosure.
FIG. 3 is a schematic flowchart of a data processing method according to this disclosure.
FIG. 4 is a schematic flowchart of a public key exchange process and a service data encryption process according to this disclosure.
FIG. 5 is a schematic flowchart of starting a computation task according to this disclosure.
FIG. 6 is a schematic flowchart of a computation task execution process according to an embodiment of this disclosure.
FIG. 7 is a schematic flowchart of another data processing method according to this disclosure.
FIG. 8 is a schematic flowchart of a decryption process of an encrypted result according to this disclosure.
FIG. 9 is a schematic flowchart of still another data processing method according to this disclosure.
FIG. 10 is a schematic structural diagram of a data processing apparatus according to an embodiment of this disclosure.
FIG. 11 is a schematic structural diagram of another data processing apparatus according to an embodiment of this disclosure.
FIG. 12 is a schematic structural diagram of still another data processing apparatus according to an embodiment of this disclosure.
FIG. 13 is a schematic structural diagram of a computer device according to an embodiment of this disclosure.

### DESCRIPTION OF EMBODIMENTS

The technical solutions in embodiments of this disclosure are clearly and completely described below with reference to the accompanying drawings in embodiments of this disclosure. It is clear that the described embodiments are merely some rather than all embodiments of this disclosure. All other embodiments obtained by a person of ordinary skill in the art based on embodiments of this disclosure without creative efforts shall fall within the protection scope of this disclosure.

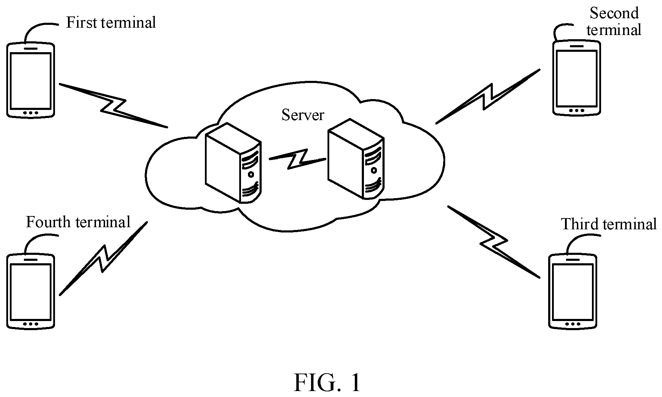

To facilitate clearer understanding of this disclosure, a data processing system for implementing this disclosure is first described. As shown in FIG. 1, the data processing system includes a server and a terminal cluster. The terminal cluster may include one or more terminals. A quantity of terminals is not limited herein. As shown in FIG. 1, the terminal cluster including four terminals is used as an example for description. The terminal cluster may specifically include a first terminal, a second terminal, a third terminal, and a fourth terminal. The first terminal, the second terminal, the third terminal, and the fourth terminal may be all connected to the server through a network, so that each terminal can exchange data with the server through the network connection.

The server may be an independent physical server, or may be a server cluster or a distributed system including at least two physical servers, or may be a cloud server that provides basic cloud computing services such as cloud services, cloud knowledge bases, cloud computing, cloud functions, cloud storage, network services, cloud communication, middleware services, domain name services, security services, content delivery networks (CDNs), big data, and artificial intelligence platforms. The terminal may be specifically a vehicle-mounted terminal, a smartphone, a tablet computer, a notebook computer, a desktop computer, a smart speaker, a screen speaker, a smart television, a smart watch, etc., but is not limited thereto. The terminal and server may be directly or indirectly connected through wired or wireless communication. In addition, quantities of terminals and servers may be one or at least two, which are not limited in this disclosure.

The terminal may be a device corresponding to a service party. Each device may include service data of the device and one or more executable files, and the device may invoke service data of another service party via the server. The executable file may be a code file or an image file of the code file for executing a computing operation on service data. The computing operation may be statistical computing, model training, operation processing, etc.

In this disclosure, a first service party may be a service party initiating a computation task request. In other words, the first service party may be a service party using service data. In addition, the first service party may also provide service data. A terminal corresponding to the first service party may be referred to as a first device. A second service party may be a service party providing service data, and a terminal corresponding to the second service party may be referred to as a second device.

One service data computing operation process may include at least one service data user and at least one service data provider. When only one service data provider and one service data user are included, the service data provider is different from the service data user.

The server may be a device corresponding to a trusted third party. The server includes a trusted execution environment. An agent component and a computation task component run in the trusted execution environment. The trusted execution environment is a mechanism for protecting object privacy and system security. The trusted execution environment can limit the agent component and the computation task component to a closed running environment, preventing the them from causing potential threats to a system and other applications. In addition, the trusted execution environment can provide some virtual hardware and software resources, such as a file system, a network, and an operating system, so that the agent component and the computation task component can run in the virtual environment without causing any adverse impact to a computer system. If the agent component and the computation task component attempt to access a resource outside the trusted execution environment or execute a dangerous operation (e.g., transmitting unencrypted service data to another device), the trusted execution environment intercepts such requests and takes a corresponding security measure. The security measure may include prohibiting execution of the dangerous operation, or suspending an application or a process executing the dangerous operation.

The trusted execution environment may be a security technology based on hardware-level system isolation and trusted root construction, which implements physical isolation between data operation and storage by using an independent secure area to ensure confidentiality and integrity of sensitive data and code and authenticity of a running process, such as a security processor. Alternatively, the trusted execution environment may be a software-level isolated environment, which is configured to run suspicious programs or code to prevent them from damaging a system, such as a security sandbox. The trusted execution environment further includes an access restriction tool. The access restriction tool is configured to restrict network access, directory access, and inter-process access of processes respectively corresponding to the agent component and the computation task component, so that the agent component and the computation task component run in a completely isolated environment, where the agent component reads data and write back data, and computation task components are allowed to access each other. The access restriction tool may include gVisor (process-level virtualization), nsjail (a process isolation tool), or Kata Container (cloud-native virtualization). The computation task component may include spark (a compute engine or framework) or Ray (a compute engine or framework). Generally, computation task components need to communicate with each other to jointly complete a distributed computation task.

Specifically, the agent component may be configured to read encrypted service data from the second device, decrypt the encrypted service data to obtain service data, and transmit the service data and an executable file to the computation task component. The computation task component may be configured to execute a computing operation on the service data according to the executable file.

The trusted third party may be an entity trusted by all service parties corresponding to the terminals in the data processing system, for example, may be a certificate authority (CA).

The data processing system of this disclosure may be configured to guide development of a private computing system framework. A main product form is a private computing platform, which provides services such as federated learning, joint query, and private information retrieval on a public cloud or a private cloud. Machine learning models obtained through the federated learning and query results obtained through the joint query and the private information retrieval may be applied to a plurality of scenarios such as joint marketing, joint advertising, and joint risk control.

The private information retrieval (PIR) or private data retrieval is a very practical technology and application in secure multi-party computing, and may be used to protect query privacy of users, as well as query results (i.e., service data) of the users, which aims to ensure that query can be completed without being sensed or leaked when the first service party submits a query request (i.e., a computation task request) to the trusted third party. In the private information retrieval, the first service party is a querying party, and an executable file provided by the first service party may be code or an image file corresponding to the code for executing a computing operation on a query result. The second service party may be a queried party. Therefore, first service data may be referred to as a query result. There is one or more second service parties.

The federated learning is also referred to as federated machine learning, federal learning, joint learning, or allied learning. The federated learning is a machine learning framework, which can effectively help a plurality of service parties (namely, the first service party and the second service party) with data use and machine learning modeling while meeting requirements of user privacy protection, data security, and departmental regulations. In the federated learning, the first service party may be a service party requiring machine learning modeling, an executable file provided by the first service party may be an initial to-be-trained machine learning model, and the to-be-trained initial machine learning model includes code or an image file of the code. The second service party may be a service party providing training data. Therefore, first service data may be training data. Particularly, the first service party may also provide training data. A computing operation on the service data may be identifying the training data by using the initial machine learning model, so that the initial machine learning model is trained to obtain a computation result. The computation result is a trained machine learning model.

The machine learning model may be a linear regression model, a logistic regression model, a decision tree model, a neural network model, etc.

The machine learning model may be applied to a joint risk control scenario, a joint advertising scenario, and a joint marketing scenario. To be specific, in the joint risk control scenario, the machine learning model may be configured for verifying whether a user is a qualified investor, or whether an individual or an institution has abnormal financial behavior. In the joint advertising scenario, the machine learning model may be configured for producing, for a product merchant, advertisement content in which users are interested. In the joint marketing scenario, the machine learning model may be configured for producing, for a product merchant, a marketing strategy for a specific product.

The joint query may be a special query manner, which mainly functions to combine two or more query results into one result set, eliminate duplicate rows in the query results, and perform sorting, computing, or other operations on the result set of the joint query. In the joint query, the first service party is a querying party, and an executable file provided by the first service party may be code or an image file corresponding to the code for implementing the joint query. The second service party may be a queried party. Therefore, first service data may be referred to as a query result. There are a plurality of second service parties.

The joint risk control scenario may be implementing risk control management on an individual or an institution based on a query result obtained through the joint query or the private information retrieval or a trained machine learning model. The risk control management may be verifying whether a user is a qualified investor, or whether an individual or an institution has abnormal financial behavior. For example, the abnormal financial behavior includes asset transfer to illegal accounts or tax evasion. In the joint risk control scenario, the first service party (i.e., the querying party or the service party requiring machine learning modeling) is specifically a risk control authority, such as a taxation authority or an asset regulatory authority. An executable file provided by the first service party may be code or an image file corresponding to the code for performing risk control management on an individual or an institution, for example, may be an initial to-be-trained machine learning model for risk control management. The second service party (i.e., the queried party or the service party providing training data) may include at least one of a banking institution, a trust institution, a fund company, etc. Service data (such as the query result or the training data) may include transaction data of users in the banking institution, the trust institution, or the fund company.

The joint advertising scenario may be producing, based on a query result obtained through the joint search or the private information retrieval or a trained machine learning model, advertisement content in which users are interested. In the joint advertising scenario, the first service party (i.e., the querying party or the service party requiring machine learning modeling) may be a product merchant. An executable file provided by the first service party may be code or an image file corresponding to the code for generating the advertisement content. The second service party (i.e., the queried party or the service party providing training data) may include a product merchant corresponding to an advertisement and an advertising platform. Service data provided by the advertising platform is advertisement behavior data of users for advertisement content. The advertisement behavior data may include a quantity of clicks/taps, a quantity of favorites, a quantity of likes, etc., of the advertisement content. Service data provided by the product merchant includes purchase behavior data of users for a product. For example, the purchase behavior data includes purchase time, a price of the product, a quantity of purchase times, basic information (production time, a purpose, etc.) of the product, etc. The advertisement behavior data and the purchase behavior data may refer to the query result or the training data.

The joint marketing scenario may be producing a marketing strategy for a product based on a query result obtained through the joint query or the private information retrieval or a trained machine learning model. In the joint marketing scenario, the first service party (i.e., the querying party or the service party requiring machine learning modeling) may be a product merchant. An executable file provided by the first service party may be code or an image file corresponding to the code for generating the marketing strategy for the product. The second service party (i.e., the queried party or the service party providing training data) may include a product merchant and a marketing institution. Service data provided by the marketing institution is basic information of users, such as names and genders. Service data provided by the product merchant is purchase behavior data of users for the product. The marketing strategy may include threshold-based discounts, coupon issuance, etc. The basic information and the purchase behavior data may refer to the query result or the training data.

The joint query being applied to the joint risk control scenario is used as example for description. The first device may be the first terminal in FIG. 1, and the second device may include the second terminal, the third terminal, and the fourth terminal in FIG. 1. The first service party corresponding to the first terminal is an investment institution, and second service parties corresponding to the second terminal, the third terminal, and the fourth terminal are respectively a banking institution, a trust institution, and a fund company. When the investment institution needs to check whether a user u1 is a qualified investor, the first terminal may transmit a computation task request to the agent component running in the trusted execution environment of the server. The computation task request indicates to verify whether the user u1 is a qualified investor. The computation task request carries object information of the investment institution, an executable file for executing a computing operation on service data, and a data identifier of each piece of encrypted service data. The object information of the investment institution may include a credit code, an institution name, etc., of the investment institution. The service data may include transaction data corresponding to the user u1 respectively in the bank institution, the trust institution, and the fund company. The executable file may be configured for verifying, based on the transaction data, whether the user u1 is a qualified investor.

After receiving the computation task request, the agent component in the server may verify, according to the object information of the investment institution, whether the investment institution has a computing request permission for the service data. For example, the server may query, according to the object information of the investment institution, whether the investment institution has abnormal investment behavior. When finding that the investment institution has abnormal investment behavior, the server determines that the investment institution does not have the computing request permission for the service data, and may refuse to verify whether the user u1 is a qualified investor. When finding that the investment institution does not have abnormal investment behavior, the server determines that the investment institution has the computing request permission for the service data, and may obtain, according to the computation task request, first encrypted transaction data from the second terminal, second encrypted transaction data from the third terminal, and third encrypted transaction data from the fourth terminal. The first encrypted transaction data is obtained by encrypting first transaction data of the user u1 in the banking institution. The first transaction data may include at least one of a loan record, a deposit record, a repayment record, etc., of the user u1 in the banking institution. The second encrypted transaction data is obtained by encrypting second transaction data of the user u1 in the trust institution. The second transaction data may include a trust product purchased by the user u1 in the trust institution, etc. The third encrypted transaction data is obtained by encrypting third transaction data of the user u1 in the fund company. The third transaction data may include a fund purchased by the user u1 in the fund company, etc.

Further, the agent component decrypts the first encrypted transaction data to obtain the first transaction data, decrypts the second encrypted transaction data to obtain the second transaction data, and decrypts the third encrypted transaction data to obtain the third transaction data. The computation task component running in the trusted execution environment of the server may verify, according to the executable file, the first transaction data, the second transaction data, and the third transaction data, whether user u1 is a qualified investor, to obtain a verification result (i.e., a computation result). The verification result may reflect that the user u1 is a qualified investor or not. The agent component may perform aggregate encryption on the verification result according to public keys respectively corresponding to the investment institution, the bank institution, the trust institution, and the fund company, to obtain an encrypted verification result (i.e., an encrypted result), transmit the encrypted verification result and the executable file to the second terminal, the third terminal, and the fourth terminal, and transmit the encrypted result to the first terminal. When determining that respective corresponding transaction data is unable to be restored based on the executable file, the second terminal, the third terminal, and the fourth terminal each decrypt the encrypted verification result by using a corresponding private key, to obtain a second partial decrypted result corresponding to each of the second terminal, the third terminal, and the fourth terminal. The first terminal may decrypt the encrypted verification result according to a private key corresponding to the investment institution, to obtain a first partial decrypted result, receive the second partial decrypted result transmitted by each of the second terminal, the third terminal, and the fourth terminal, and perform aggregate decryption on the encrypted verification result according to the first partial decrypted result and the second partial decrypted result, to obtain the verification result.

It can be learned that this disclosure can implement joint query in the bank institution, the trust institution, and the fund company, implement authentication on the user u1 and joint risk control on the user u1 without leaking unencrypted transaction data of the user u1, circulate transaction data of the bank institution, the trust institution, and the fund company, and improve security of the transaction data of the service parties.

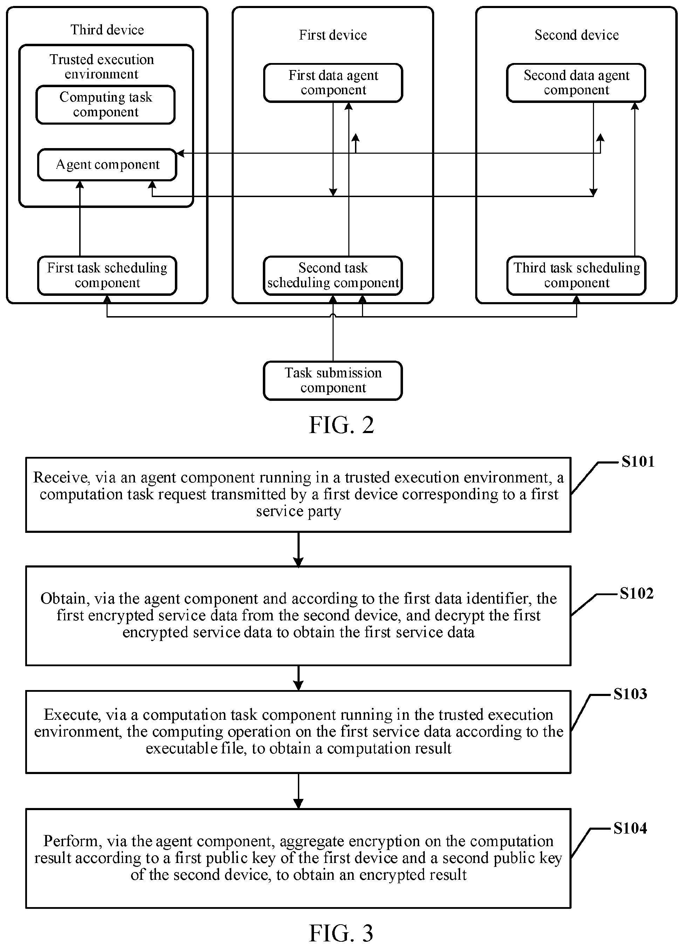

In an embodiment, this disclosure provides a schematic structural diagram of another data processing system. As shown in FIG. 2, the data processing system includes a third device, a first device, and a second device. The third device may be a device corresponding to the trusted third party. In other words, the third device may be the server in FIG. 1. The first device may be a device corresponding to the first service party, and the first device may be any terminal in FIG. 1. The second device may be a device corresponding to the second service party, and the second device may be a terminal in FIG. 1 other than the terminal corresponding to the first service party.

The first device may include a task submission component, a second task scheduling component, and a first data agent component. The second device may include a third task scheduling component and a second data agent component. The third device includes a trusted execution environment and a first task scheduling component. The trusted execution environment includes a computation task component and an agent component.

The task submission component may be configured to generate a computation task request, and synchronize the computation task request to the first task scheduling component, the second task scheduling component, and the third task scheduling component.

The second task scheduling component may be configured to start the first data agent component after receiving the computation task request. The first data agent component has second service data stored therein, and the first data agent component is configured to encrypt the second service data to obtain second encrypted service data, and synchronize the second encrypted service data to the agent component.

The third task scheduling component may be configured to start the second data agent component after receiving the computation task request. The second data agent component has first service data stored therein, and the second data agent component is configured to encrypt the first service data to obtain first encrypted service data, and synchronize the first encrypted service data to the agent component.

Corresponding encryption manners for the service data may be negotiated by the trusted third party with the first service party and the second service party respectively. To be specific, an encryption manner for the second service data may be negotiated by the first service party and the trusted third party. In this way, the second encrypted service data can be decrypted only by the trusted third party and the first service party. An encryption manner for the first service data may be negotiated by the second service party and the trusted third party. In this way, the first encrypted service data can be decrypted only by the trusted third party and the second service party. This helps to ensure security of the service data.

Encryption algorithms include an asymmetric encryption algorithm and a symmetric encryption algorithm. The asymmetric encryption algorithm may mean that different keys are used in an encryption process and a decryption process. The asymmetric encryption algorithm features that one key (a public key) is public, and the other key (a private key) is confidential. The public key is configured for encrypting data, and the private key is configured for decrypting data. The asymmetric encryption algorithm includes RSA (an asymmetric encryption algorithm), a packsack algorithm, Rabin (which may be considered as a variant of RSA), a public key encryption algorithm in a key exchange protocol, an elliptic curve cryptography (ECC), etc. The symmetric encryption algorithm may mean that the same key is used in an encryption process and a decryption process. Therefore, the key may be referred to as a symmetric key. The symmetric encryption algorithm may include a data encryption standard (DES), an advanced encryption standard (AES), etc.

The first task scheduling component may be configured to start the agent component and the computation task component after receiving the computation task request, and synchronize the computation task request to the agent component. The agent component may be configured to receive the second encrypted service data and the first encrypted service data, and decrypt the second encrypted service data and the first encrypted service data to obtain the second service data and the first service data. The computation task component may be configured to obtain an executable file, the second service data, and the first service data from a service interface of the agent component, add the second service data and the first service data to the executable file to obtain an updated executable file, and execute the updated executable file to obtain a computation result. The agent component is further configured to obtain the computation result from the computation task component through the service interface, perform aggregate encryption on the computation result according to a first public key of the first device and a second public key of the second device to obtain an encrypted result, and return the encrypted result to the first data agent component and the second data agent component.

The service interface may be an interface for exchanging data with the computation task component in the agent component.

The second data agent component is further configured to: when determining that the first service data is unable to be restored based on the executable file, decrypt the encrypted result according to a second private key of the second service party to obtain a second partial decrypted result, and transmit the second partial decrypted result to the first data agent component. The first data agent component is further configured to: decrypt the encrypted result according to a first private key of the first service party to obtain a first partial decrypted result, and perform aggregate decryption on the encrypted result according to the first partial decrypted result and the second partial decrypted result, to obtain the computation result.

In conclusion, the data processing system in this disclosure has the following beneficial effects: 1. Service data is encrypted by using an encryption algorithm negotiated by the trusted third party and a data provider, which ensures that encrypted service data can be decrypted only by the trusted third party and the data provider, thereby improving security of the service data.

2. Aggregate encryption is performed on a computation result, so that any party can only partially decrypt an encrypted result, and the final computation result can be obtained only by aggregating respective partial decrypted results of parties (namely, the first service party and the second service party). To be specific, a device of the first service party can perform decryption to obtain the final computation result only after the second service party transmits a second partial decrypted result to the first service party. In other words, the first service party can obtain the computation result only when authorized by the second service party. This can ensure joint ownership of the computation result by the first service party and the second service party, ensure that execution is secure and controllable, and improve security of the computation result.

3. A decryption process of encrypted service data is implemented by using the agent component in the trusted execution environment, and a computing process of the service data is implemented by using the computation task component in the trusted execution environment. In this way, a secure isolated data computing environment is constructed by using the trusted execution environment, and the computing process for the service data is implemented in the secure isolated data environment. Computing, storage, and network isolation are performed on a computation task at a process level, making it unnecessary to perform complex independent deployment at a cluster level, or rely on dedicated hardware. Instead, an existing universal hardware resource is used for implementation, thereby implementing efficient data cooperation.

The computation task herein may be a computing operation on service data. The computing, storage, and network isolation on the computation task at a process level may mean that computing, storage, and network isolation on the computation task are all implemented by processes corresponding to the computation task component and the agent component.

Further, FIG. 3 is a schematic flowchart of a data processing method according to an embodiment of this disclosure. As shown in FIG. 3, the method may be executed by a device corresponding to a trusted third party. The device corresponding to the trusted third party may be a terminal, the server in FIG. 1, or a terminal and a server. In this disclosure, devices corresponding to the trusted third party may be collectively referred to as a third device. The method may include the following operations:

S101: Receive, via an agent component running in a trusted execution environment, a computation task request transmitted by a first device corresponding to a first service party.

The computation task request includes an executable file for executing a computing operation on first service data in a second device and a first data identifier of first encrypted service data corresponding to the first service data.

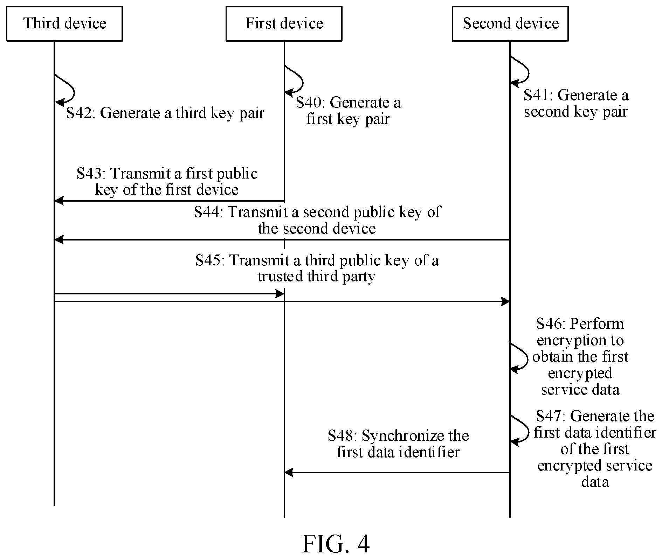

In an embodiment, as shown in FIG. 4, before the third device performs operation S101, the following operations S40 to S48 may be executed:
S40: The first device generates a first key pair of the first service party. The first key pair includes a first private key and a first public key. The first public key may be used for encrypting data, and the first private key may be configured for decrypting data. Specifically, the first device may generate a first random number by using a random algorithm, use the first random number as the first private key, and obtain an (*skₐ*)^{th} power of base data to obtain the first public key. *skₐ* is the first private key. Then, the first key pair may be represented as (*skₐ*, *PKₐ* = *g^{skₐ}*). *g* is the base data, *PKₐ* is the first public key, the base data may be a base point of an elliptic curve group 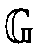 , the elliptic curve group may include an elliptic curve for generating a key, and the base data may be data agreed on in advance by the first service party, a second service party, and the trusted third party. The random algorithm may include any one of a numerical probability algorithm, a Las Vegas algorithm, a Monte Carlo algorithm, and a Sherwood algorithm.

S41: The second device may generate a second key pair. The second key pair includes a second private key and a second public key. The second public key may be configured for encrypting data, and the second private key may be configured for decrypting data. Specifically, the second device may generate a second random number by using a random algorithm, use the second random number as the second private key, and obtain an (*sk_{b}*)^{th} power of the base data to obtain the second public key. *sk_{b}* is the second private key. Then, the second key pair may be represented as (*sk_{b}*, *PK_{b}* = *g^{sk_{b}}*). *PK_{b}* is the second public key.

S42: The third device generates a third key pair. The third key pair includes a third private key and a third public key. The third public key may be configured for encrypting data, and the third private key may be configured for decrypting data. Specifically, the third device may generate a third random number by using a random algorithm, use the third random number as the third private key, and obtain an (*sk_{c}*)^{th} power of the base data to obtain the third public key. *sk_{c}* is the third private key. Then, the third key pair may be represented as (*sk_{c}*, *PK_{c}* = *g^{sk_{c}}*). *PK_{c}* is the third public key.

S43: The first device transmits the first public key of the first device to the third device.

S44: The second device transmits the second public key of the second device to the third device.

In operations S43 and S44, the first device may transmit the first public key of the first device to the third device, and the second device may transmit the second public key of the second device to the third device, so that the third device may perform aggregate encryption on a computation result of service data based on the first public key and the second public key. The aggregate encryption herein may be a manner of encryption in which a plurality of parties participate. For example, the aggregate encryption on the computation result may need the first public key of the first device and the second public key of the second device. In other words, the aggregate encryption on the computation result requires participation of the first service party and the second service party.

S45: The third device transmits the third public key of the trusted third party to the first device and the second device. In this way, when the first device may generate a symmetric key between the first device and the third device based on the third public key and the first private key, the symmetric key between the first device and the third device may be configured for encrypting second service data and decrypting second encrypted service data. Similarly, when the second device may generate a symmetric key between the second device and the third device based on the third public key and the second private key, the symmetric key between the second device and the third device may be configured for encrypting the first service data and decrypting the first encrypted service data.

In this disclosure, the symmetric key between the second device and the third device is mainly used as an example for description. In other words, all symmetric keys mentioned below are the symmetric key between the second device and the third device. For a specific generation process of the symmetric key, refer to the following descriptions.

The first encrypted service data may be data obtained by encrypting the first service data. The first service data can be obtained by decrypting the first encrypted service data. The first service data may refer to unencrypted data.

The executable file may indicate a code program for executing a computing operation on the first service data in the second device, or the executable file may be text information indicating to execute a computing operation on the first service data in the second device.

S46: The second device encrypts the first service data to obtain the first encrypted service data. The second device may encrypt the first service data by using the third public key, to obtain the first encrypted service data. Alternatively, the second device may encrypt the first service data by using a symmetric key, to obtain the first encrypted service data.

S47: The second device generates a data identifier, denoted as the first data identifier, of the first encrypted service data. For example, a hash operation is performed on the first encrypted service data to obtain a hash value of the first encrypted service data, and the hash value of the first encrypted service data may be determined as the first data identifier. The first data identifier may be configured for uniquely identifying the first encrypted service data. The first data identifier is equivalent to an authorization code. To be specific, a service party having the first data identifier has a computing request permission for the first service data. The computing request permission may be a permission to request the trusted third party to execute a computing operation on the first service data.

S48: The second device synchronizes the first data identifier to the first device. The second device may synchronize the first data identifier to the first device, to authorize the first service party with the computing request permission for the service data of the second service party.

The second device may further generate a validity period of the first data identifier of the first encrypted service data, and transmit the first data identifier and the validity period to the third device. To be specific, at time within the validity period, the first data identifier is valid, and the service party having the first data identifier has the computing request permission for the service data. If time exceeds the validity period, the first data identifier becomes invalid, and the service party having the first data identifier does not have the computing request permission for the service data.

Similarly, the first device may encrypt the second service data to obtain the second encrypted service data, obtain a second data identifier of the second encrypted service data, and synchronize the second data identifier of the second encrypted service data to the second device, to authorize the second service party with a computing request permission for the second service data.

Based on the foregoing operations S40 to S48, public keys are exchanged between the first service party, the second service party, and the trusted third party, which facilitates subsequent aggregate encryption of a computation result and decryption of encrypted service data.

After obtaining the first data identifier of the first encrypted service data, the first device may transmit the computation task request to the agent component running in the trusted execution environment of the trusted third party. The third device may receive the computation task request by using a task scheduling component, and transmit the computation task request to the agent component by using the task scheduling component. The computation task request indicates to execute a computing operation on the first service data, and the computation task request carrying the executable file for executing a computing operation on the first service data and the first data identifier of the first encrypted service data corresponding to the first service data. The computation task request may further carry object information of the first service party, a parameter needed to execute a computing operation on the service data, and the second data identifier of the second encrypted service data. For example, when the first service party is an institution, the object information may include a name, a credit code, registration time, etc., of the institution. When the first service party is a user (i.e., an individual), the object information may include information such as a name of the user.

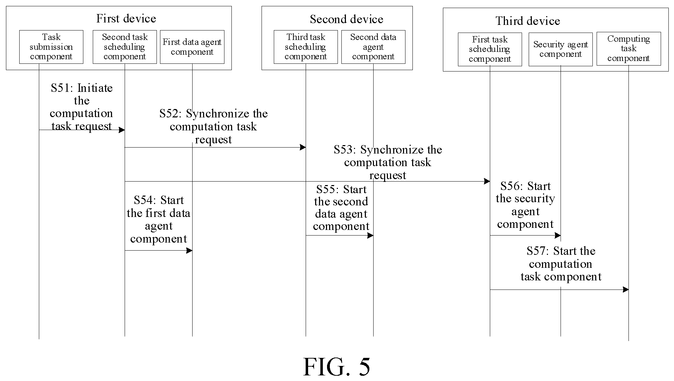

The process in which the first device transmits the computation task request to the third device is equivalent to a process of starting a computation task. As shown in FIG. 5, the first device includes a task submission component, a second task scheduling component, and a first data agent component; the second device includes a third task scheduling component and a second data agent component; and the third device includes a first task scheduling component, a security agent component, and a computation task component. The process of starting the computation task includes the following operations S51 to S57:

S51: The task submission component initiates the computation task request to the second task scheduling component. When the first service party needs to request to execute a computing operation on the first service data, the task submission component may generate the computation task request and initiate the computation task request to the second task scheduling component.

S52: The second task scheduling component synchronizes the computation task request to the third task scheduling component.

S53: The second task scheduling component synchronizes the computation task request to the first task scheduling component.

S54: The second task scheduling component starts the first data agent component.

In operations S52 to S53, after receiving the computation task request, the second task scheduling component may separately synchronize the computation task request to the third task scheduling component of the second device and the first task scheduling component of the third device. When the first device also needs to synchronize the second service data to the third device, the second task scheduling component may start the first data agent component, so that the first data agent component synchronizes the second encrypted service data to the third device. The starting the first data agent component herein may be running the first data agent component, so that the first data agent component enters an operating state.

S55: The third task scheduling component starts the second data agent component. After receiving the computation task request, the third task scheduling component may run the second data agent component, so that the second data agent component synchronizes the first encrypted service data to the third device.

S56: The first task scheduling component starts the security agent component.

The security agent component may be the agent component running in the trusted execution environment.

S57: The first task scheduling component starts the computation task component.

In operations S56 and S57, after receiving the computation task request, the first task scheduling component may run the agent component and the computation task component, so that the agent component can receive the encrypted service data synchronized by the second data agent component and the first data agent component, and decrypt the encrypted service data, and the computation task component can execute a computing operation on the service data.

S102: Obtain, via the agent component and according to the first data identifier, the first encrypted service data from the second device, and decrypt the first encrypted service data to obtain the first service data.

In this disclosure, after receiving the computation task request, the agent component may verify, according to the computation task request, whether the first service party has the computing request permission for the service data. Specifically, the security agent component may query for the validity period of the first data identifier, and determine that the first service party does not have the computing request permission for the service data when current time is not within the validity period. When the current time is within the validity period, it is determined that the first service party has the computing request permission for the service data, and the computation task request may be transmitted to the second device, so that the second device returns the first encrypted service data to the agent component, and the first encrypted service data is decrypted to obtain the first service data. The encrypted service data is decrypted by using the agent component in the trusted execution environment, which can avoid leaking the service data, thereby improving security of the service data.

Particularly, when the first service party is an institution, the agent component may query, based on the object information in the computation task request, for a business status of the institution corresponding to the first service party. If the business status is a normal state, it is determined that the first service party has the computing request permission for the service data. If the business status is an abnormal state, it is determined that the first service party does not have the computing request permission for the service data. The abnormal state may be an abnormal registered address or tax evasion. The normal state may be a condition free of the abnormal registered address and tax evasion.

In an embodiment, the first encrypted service data is obtained by concatenating ciphertext data of the first service data and a first coordinate value. The ciphertext data of the first service data is obtained by encrypting the first service data based on a symmetric key. In other words, ciphertext data of service data may be encrypted service data. The first coordinate value is a coordinate value associated with base data in an elliptic curve group. To be specific, the first coordinate value is a horizontal-axis coordinate value of a point on an elliptic curve to which the base data is mapped in the elliptic curve group.

The decrypting the first encrypted service data to obtain the first service data includes: The third device may divide the first encrypted service data based on a concatenation sequence of the ciphertext data of the first service data and the first coordinate value and a data length of the ciphertext data, to obtain the ciphertext data of the first service data and the first coordinate value; generate, according to the first coordinate value, the second public key, and the third private key of the trusted third party, a second coordinate value and a third coordinate value associated with the third private key in the elliptic curve group; generate the symmetric key according to the first coordinate value, the second coordinate value, the third coordinate value, the second public key, and the third public key corresponding to the third private key; and decrypt the ciphertext data of the first service data according to the symmetric key, to obtain the first service data. The encrypted service data is decrypted in a sandbox by using the agent component, which can prevent unencrypted service data from being obtained by an illegal service party, thereby improving security of the service data.

The concatenation sequence of the ciphertext data of the first service data and the first coordinate value and the data length of the ciphertext data of the service data may be agreed on in advance by the second service party and the trusted third party. For example, the concatenation sequence is that the first coordinate value is concatenated after the ciphertext data of the service data, and the data length of the ciphertext data of the service data is L1. Then, the first L1 bits in the first encrypted service data is the ciphertext data of the service data, and data after the L1 bits is the first coordinate value.

The second coordinate value is a vertical-axis coordinate value of a point on an elliptic curve to which the third private key is mapped in the elliptic curve group, and the third coordinate value is a vertical-axis coordinate value of a point on an elliptic curve to which the third private key is mapped in the elliptic curve group. The point on the elliptic curve to which the base data is mapped in the elliptic curve group and the point on the elliptic curve to which the third private key is mapped in the elliptic curve group are the same coordinate point.

For example, the first encrypted service data may be expressed as the following formula (1): $ct 1 = X \left‖En{c}_{K}\left(m1\right)\right.$ (1)

In formula (1), ***ct*1** is the first encrypted service data, ***X*** is the first coordinate value, ***Enc_{K}***(***m*1)** is the ciphertext data of the service data, and ∥ represents concatenation, the third device may divide ***ct*1** to obtain ***X*** and ***Enc_{K}***(***m*1**), and ***m*1** is the first service data.The second coordinate value and the third coordinate value are calculated based on the following formula (2): $Y = {X}^{s {k}_{c}} , Z = P {{K}_{b}}^{s {k}_{c}}$ (2)

In formula (2), ***Y*** is the second coordinate value, and ***Z*** is the third coordinate value. To be specific, the second coordinate value is an (***sk_{c}***)^{th} power of the first coordinate value, and the third coordinate value is an (***sk_{c}***)^{th} power of ***PK_{b}***. The symmetric key between the second service party and the trusted third party is calculated based on the following formula (3): $K = Hash \left(P{K}_{c},P{K}_{b},X,Y,Z\right)$ (3)

In formula (3), ***K*** is the symmetric key, and ***Hash*** is a hash operation. A symmetric decryption algorithm ***Dec_{K}***(·) is invoked to decrypt ***Enc_{K}***(***m*1**), to obtain the first service data.

S103: Execute, via a computation task component running in the trusted execution environment, the computing operation on the first service data according to the executable file, to obtain a computation result.

In this disclosure, after obtaining the service data and the executable file, the agent component may transmit the executable file and the service data to the computation task component running in the trusted execution environment; and the computation task component adds the first service data to the executable file, and executes an updated executable file to obtain a computation result. In this way, a computation task related to service data is run in a completely isolated environment (i.e., the trusted execution environment), thereby improving security of the service data.

In an embodiment, S103 includes: The computation task request further includes the second data identifier of the second encrypted service data. The third device may obtain, via the agent component, the second encrypted service data from the first device based on the second data identifier, decrypt the second encrypted service data to obtain the second service data, add the second service data and the first service data to the executable file to obtain an updated executable file, and execute the updated executable file to obtain a computation result.

The second encrypted service data may be obtained by encrypting the second service data based on the third public key. In this case, the third device may decrypt the second encrypted service data based on the third private key, to obtain the second service data. Alternatively, the second encrypted service data may be obtained by encrypting the second service data based on a symmetric key, and the third device may decrypt the second encrypted service data based on the symmetric key, to obtain the second service data. The symmetric key herein may be the symmetric key between the first service party and the trusted third party. For the process of decrypting the second encrypted service data based on the symmetric key, refer to the process of decrypting the first encrypted service data based on the symmetric key.

An image file may be obtained by compressing code for executing a computing operation on service data. When the executable file is an image file corresponding to code for executing a computing operation on the service data, the trusted third party may perform decompression processing on the image file to obtain the code for executing a computing operation on the service data, and add the service data to the code to obtain an updated executable file.

In an embodiment, in the federated learning, the service data is training data, the executable file is an initial to-be-trained machine learning model, the computing operation on the service data may be identifying the training data to obtain an identification label of the training data, and the computation result may be a machine learning model obtained through training based on the training data. Specifically, the training data is input into the initial machine learning model, the training data is identified by using the initial machine learning model, to obtain an identification label, and the initial machine learning model is trained according to the identification label and an annotation label of the training data, to obtain a trained machine learning model.

The identification label may be a label obtained by the initial machine learning model by identifying the training data, the annotation label may be obtained by manually annotating the training data, and the identification label and the annotation label may be configured for reflecting an attribute feature of the training data.

In a joint risk control scenario, the training data may include transaction data of a user in a bank institution, a trust institution, a fund company, etc. The identification label and the annotation label of the training data reflect that the user has abnormal financial behavior or not; and the trained machine learning model may be configured for implementing risk control management, e.g., identifying whether the user has abnormal financial behavior.

In a joint advertising scenario, the training data may include advertisement behavior data, provided by an advertising platform, of users for advertisement content, and purchase behavior data, provided by a product merchant, of users for a product; the identification label and the annotation label of the training data include advertisement content in which users are interested; and the trained machine learning model may be configured for generating advertisement content in which users are interested.

In a joint marketing scenario, the training data may include basic information, provided by a marketing institution, of users, and purchase behavior data, provided by a product merchant, of users for a product; the identification label and the annotation label of the training data include marketing strategies for the product; and the trained machine learning model may be configured for generating a marketing strategy for the product.

In joint query or private information retrieval, the service data is a query result obtained through joint query or private information retrieval; the executable file may indicate to perform deduplication processing, statistical processing, etc., on the query result; the computing operation on the service data may be deduplication processing, statistical processing, etc., on the query result; and the computation result may be a processed query result.

For example, the computation task request of the first service party further carries a query condition, the query condition indicates to query for annual profit of a company in 2023, and the service data includes total revenue and total expenses of the company in 2023 that are obtained through query from the company (the second service party). The computing operation on the service data may be performing subtraction processing on the total revenue and the total expenses of the company in 2023, to obtain the annual profit of the company in 2023. In other words, the annual profit of the company in 2023 is the computation result.

Particularly, the query result may be used as training data to train an initial machine learning model. In this case, the computation result may be a trained machine learning model.

S104: Perform, via the agent component, aggregate encryption on the computation result according to a first public key of the first device and a second public key of the second device, to obtain an encrypted result.

In this disclosure, aggregate encryption is performed on the computation result, and the final computation result can be obtained only when both the first service party and the second service party participate in a decryption process. This helps to ensure joint ownership of a data cooperation result (i.e., the computation result), can ensure that the computation result is secure and controllable, and saves complex manual review.

The encrypted result is transmitted to the first device and the second device, so that the first device and the second device perform aggregate decryption on the encrypted result to obtain the computation result.

The first device and the second device are configured to perform aggregate decryption on the encrypted result to obtain the computation result. The aggregate decryption is a multi-party decryption process that requires participation of both the first device and the second device to recover the computation result from the encrypted result. In other words, the aggregate decryption may be a manner of decryption in which a plurality of devices participate.

The first device is configured to perform aggregate decryption on the encrypted computation result according to a first partial decrypted result and a second partial decrypted result, to obtain the computation result. The first partial decrypted result is obtained by the first device by decrypting the encrypted result based on the first private key corresponding to the first public key, the second partial decrypted result is transmitted to the first device by the second device when the second device determines that the first service data is unable to be restored based on the executable file, and the second partial decrypted result is obtained by decrypting the encrypted result based on the second private key corresponding to the second public key.

The executable file in the second device is transmitted from the first device or the agent component to the second device. For example, after transmitting the computation task request to the agent component of the third device, the first device may synchronize the computation task request to the second device. Alternatively, the agent component may synchronize the computation task request to the second device, and the second device may obtain the executable file from the computation task request.

Since the first service party provides the executable file, and the second service party provides the service data, the computation result of the service data is owned by both the first service party and the second service party. Therefore, when the second device transmits the second partial decrypted result to the first device, it is equivalent to that the second service party authorizes the first service party to use the computation result. When determining that the service data can be restored based on the executable file, the second device may refuse to transmit the second partial decrypted result to the first device. In this case, the first device is unable to obtain the computation result through decryption. This can ensure that the computation result is secure and controllable

The aggregate encryption may be a manner of encryption in which the first service party and the second service party participate. To be specific, the first public key of the first device and the second public key of the second device are needed in an aggregate encryption process. The aggregate decryption may be a manner of decryption in which the first service party and the second service party participate. To be specific, the first private key of the first service party and the second private key of the second service party are needed in an aggregate decryption process. A private key of each service party is managed by the service party. Therefore, a partial decrypted result of the first service party and a partial decrypted result of the second service party are needed in the aggregate decryption process, and the computation result is unable to be obtained by only one service party participating in decryption.

The encrypted result may be the computation result on which aggregate encryption is performed. Whether the first service data can be restored based on the executable file may be determined based on computing complexity of the executable file. For details, refer to the following descriptions.

The first partial decrypted result may be data obtained from the encrypted result through decryption based on the first private key, the second partial decrypted result may be data obtained from the encrypted result through decryption based on the second private key, and neither the first partial decrypted result nor the second partial decrypted result is the final computation result. For descriptions about the first partial decrypted result and the second partial decrypted result, refer to the following descriptions.

In an embodiment, the performing aggregate encryption on the computation result according to the first public key of the first device and the second public key of the second device by using the agent component, to obtain an encrypted result includes: The third device may multiply the first public key of the first device and the second public key of the second device by using the agent component, to obtain a joint public key; determine an r^{th} power of the joint public key as a transformed public key; obtain an r^{th} power of base data to obtain expanded base data, r being the first random number, and the base data being used for calculating the first public key and the second public key; and perform aggregate encryption on the computation result according to the expanded base data and the transformed public key, to obtain the encrypted result. Aggregate encryption is performed on the computation result, so that aggregate decryption can be performed on the encrypted result only when both the first service party and the second service party participate. This helps to ensure joint ownership of the computation result, and ensure that the computation result is secure and controllable.

In an embodiment, the performing aggregate encryption on the computation result according to the expanded base data and the transformed public key, to obtain the encrypted result includes: The third device may perform a hash operation on the transformed public key and the computation result to obtain a hash value, and use the hash value as digest data of the computation result; perform expansion processing on the transformed public key according to a data length of the computation result, to obtain a random byte stream; perform exclusive OR processing on the random byte stream and the computation result to obtain an exclusive OR processing result; and concatenate the expanded base data, the digest data, and the exclusive OR processing result to obtain the encrypted result.

A data length of the random byte stream is the same as the data length of the computation result. To be specific, the random byte stream may be obtained by adding a random number to the transformed public key according to the data length of the computation result.

The exclusive OR processing may mean as follows: Two pieces of data at the same position in the random byte stream and the computation result are compared. When the two pieces of data are the same, a comparison result at the position is 0. When the two pieces of data are different, a comparison result at the position is 1. Comparison results at all positions form the exclusive OR processing result. For example, the random byte stream is 0101, and the computation result is 1011. In this case, the exclusive OR processing result is 1110.

For example, the third device may calculate the joint public key based on the following formula (4): $P {K}_{t} = P {K}_{a} ⋅ P {K}_{b}$ (4)

In formula (4), ***PKₜ*** is the joint public key. The r^{th} power of the joint public key is used as the transformed public key. To be specific, the transformed public key may be expressed by using the following formula (5): $PK * = {\left(P{K}_{t}\right)}^{r}$ (5)

In formula (5), ***PK**** is the transformed public key. ***PK**** is expanded by using a key derivation function (KDF) into the random byte stream whose data length is the same as the data length of the computation result. Exclusive OR processing is performed on the random byte stream and the computation result to obtain the exclusive OR processing result. The exclusive OR processing result may be expressed by using the following formula (6): $c = k ⊕ m 2$ (6)

In formula (6), ***c*** is the exclusive OR processing result, ***m*2** is the computation result, ***k*** is the random byte stream, and ⊕ represents exclusive OR processing (i.e., an exclusive OR operator). A hash operation is performed on the transformed public key and the computation result to obtain the digest data of the computation result. The digest data may be expressed by using the following formula (7): $digest = Hash \left(PK*,m2\right)$ (7)

In formula (7), ***digest*** represents the digest data of the computation result. The r^{th} power of the base data is used as the expanded base data. The expanded base data, the digest data, and the exclusive OR processing result are concatenated to obtain the encrypted result. The encrypted result may be expressed by using the following formula (8): $ct 2 = {g}^{r} \left‖digest\right‖ c$ (8)

In formula (8), ***ct*2** is the encrypted result, and ***g^{r}*** is the expanded base data.

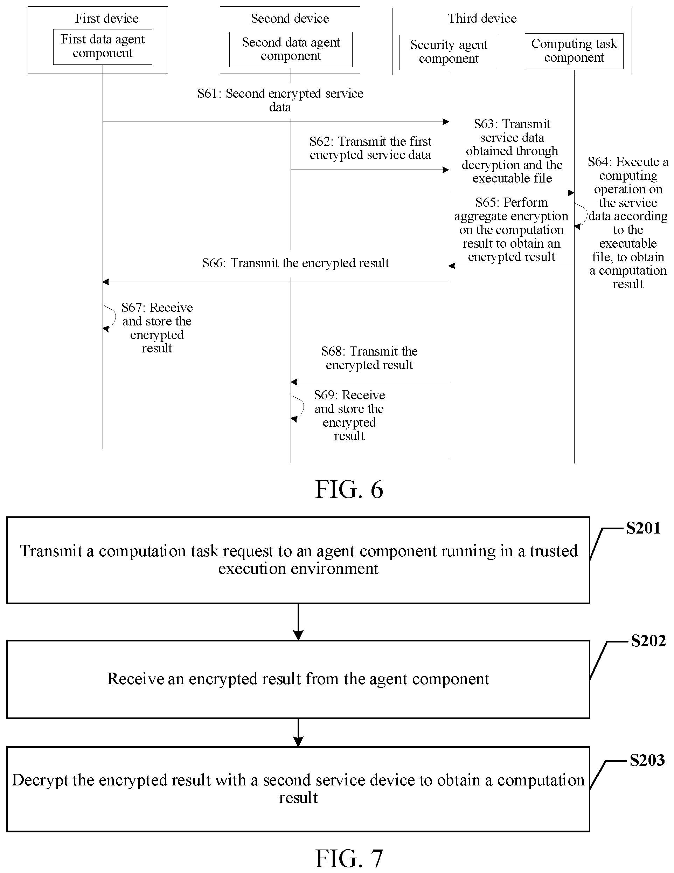

In an embodiment, the third device executes a computing operation on the second service data and the first service data based on the executable file, to execute the computation task. An execution process of the computation task is shown in FIG. 6. The first device includes a first data agent component, the second device includes a second data agent component, and the third device includes a security agent component and a computation task component. The execution process of the computation task includes the following operations S61 to S69:

S61: The first data agent component transmits the second encrypted service data to the security agent component. The first data agent component may encrypt the second service data to obtain the second encrypted service data. For example, the first data agent component may encrypt the second service data based on the third public key to obtain the second encrypted service data, and transmit the second encrypted service data to the agent component.

S62: The second data agent component transmits the first encrypted service data to the security agent component. The second data agent component may encrypt the first service data to obtain the first encrypted service data. For example, the second data agent component may encrypt the first service data based on the third public key to obtain the first encrypted service data, and transmit the first encrypted service data to the agent component.

S63: The security agent component transmits service data obtained through decryption and the executable file to the computation task component. For example, the security agent component may decrypt the second encrypted service data and the first encrypted service data to obtain the second service data and the first service data. For example, the second encrypted service data and the first encrypted service data are both obtained through encryption based on the third public key. The agent component may separately decrypt the second encrypted service data and the first encrypted service data based on the third private key, to obtain the second service data and the first service data; and transmit the second service data, the first service data, and the executable file to the computation task component through a service interface of the security agent component.

S64: The computation task component may execute a computing operation on the service data according to the executable file, to obtain a computation result. The computation task component may add the second service data and the first service data to the executable file, and execute an updated executable file to obtain a computation result.

S65: The agent component performs aggregate encryption on the computation result to obtain an encrypted result. The computation task component may return the computation result to the security agent component through the service interface. The security agent component may perform aggregate encryption on the computation result according to the first public key of the first device and the second public key of the second device, to obtain an encrypted result.

S66: The agent component transmits the encrypted result to the first data agent component.

S67: The first data agent component receives and stores the encrypted result.

In operations S66 to S67, when obtaining the encrypted result, the security agent component may transmit the encrypted result to the first data agent component, and the first data agent component may receive the encrypted result and store the encrypted result, so that the first device may perform aggregate decryption on the encrypted result based on a second partial decrypted result of the second device and a first partial decrypted result of the first device, to obtain the computation result.

S68: The security agent component transmits the encrypted result to the second data agent component.

S69: The second data agent component receives and stores the encrypted result.

In operations S68 to S69, when obtaining the encrypted result, the security agent component may transmit the encrypted result to the second data agent component, and the second data agent component may receive the encrypted result and store the encrypted result, so that the second device may decrypt the encrypted result to obtain the second partial decrypted result.

In an embodiment, the third device may divide the computation result to obtain a first execution sub-result and a second execution sub-result. For example, if a data length of the computation result is L3, the first L4 bits of data of the computation result may be used as the first execution sub-result, and data after the L4 bits in the computation result may be used as the second execution sub-result, L4 being less than L3. The first execution sub-result is encrypted by using the first public key, to obtain a first encrypted execution sub-result, and the first encrypted sub-result is transmitted to the first device. The second execution sub-result is encrypted by using the second public key, to obtain a second encrypted execution sub-result, and the second encrypted sub-result is transmitted to the second device.

The first device may decrypt the first encrypted sub-result based on the first private key to obtain the first execution sub-result, receive the second execution sub-result transmitted by the second device, and concatenate the first execution sub-result and the second execution sub-result to obtain the computation result. The second execution sub-result transmitted by the second device is obtained by the second device by decrypting the second encrypted sub-result based on the second private key.

This disclosure has at least the following beneficial effects: (1) An agent component and a computation task component are deployed in a trusted execution environment of a trusted third party corresponding to service parties, and decryption and computing processes of first encrypted service data are both implemented by using the agent component and the computation task component in the trusted execution environment. Therefore, service data of the service parties is circulated through the trusted execution environment without creating an independent cluster for each service party or relying on dedicated hardware, which reduces service data circulation costs and facilitates a service data circulation process. In addition, the circulation process does not require manual participation, which improves service data circulation efficiency. (2) Aggregate encryption is performed on a computation result, so that a second service party transmits a second partial decrypted result obtained by the second service party to a first service party only when determining that original data (i.e., service data) is unable to be restored based on an executable file. In this way, the first service party can perform aggregate decryption on an encrypted result based on a first partial decrypted result obtained by the first service party and the received second partial decrypted result, to obtain the computation result. This can ensure joint ownership of the computation result by the first service party and the second service party, ensure that the computation result is secure and controllable, and improve security of the computation result.

Further, FIG. 7 is a schematic flowchart of another data processing method according to an embodiment of this disclosure. As shown in FIG. 7, the method may be executed by a device corresponding to a first service party. The device corresponding to the first service party may be the terminal in FIG. 1, the server in FIG. 1, or a terminal and a server. In this disclosure, devices corresponding to the first service party may be collectively referred to as a first device. The method may include the following operations:

S201: Transmit a computation task request to an agent component running in a trusted execution environment.

The computation task request includes an executable file for executing a computing operation on first service data and a first data identifier of first encrypted service data corresponding to the first service data. The agent component is configured to obtain, according to the first data identifier, the first encrypted service data from a second device corresponding to a second service party, and decrypt the first encrypted service data to obtain the first service data.

In this disclosure, a task submission component in the first device may generate the computation task request, and transmit the computation task request to a task scheduling component in the first device; the task scheduling component in the first device synchronizes the computation task request to a task scheduling component in a third device; and the task scheduling component in the third device forwards the computation task request to the agent component.

S202: Receive an encrypted result from the agent component.

The encrypted result is obtained by the agent component by performing aggregate encryption on a computation result according to a first public key of the first device and a second public key of the second device, and the computation result is obtained by executing a computing operation on the first service data according to the executable file by a computation task component running in the trusted execution environment.

S203: Perform aggregate decryption on the encrypted result with the second device to obtain the computation result.

In this disclosure, the first device and the second device may jointly perform aggregate decryption on the encrypted result to obtain the computation result. This helps to ensure joint ownership of the computation result by the first service party and the second service party, and ensure that the computation result is secure and controllable.

In an embodiment, the foregoing operation S203 includes: decrypting the encrypted result according to a first private key corresponding to the first public key to obtain a first partial decrypted result, receiving a second partial decrypted result received from the second device corresponding to the second service party, and performing aggregate decryption on the encrypted result according to the first partial decrypted result and the second partial decrypted result, to obtain the computation result.

The second partial decrypted result is transmitted to the first device corresponding to the first service party by the second device when the second device determines that the first service data is unable to be restored based on the executable file, and the second partial decrypted result is obtained by decrypting the encrypted result based on a second private key corresponding to the second public key. The encrypted result is transmitted to the second device by the agent component. The executable file in the second device is transmitted from the first device or the agent component to the second device.

In an embodiment, the decrypting the encrypted result according to a first private key corresponding to the first public key to obtain a first partial decrypted result includes: The encrypted result is obtained by concatenating expanded base data, digest data of the computation result, and an exclusive OR processing result. Therefore, the first device may extract the expanded base data from the encrypted result according to a concatenation sequence and a data length of each piece of data (namely, the expanded base data, the digest data of the computation result, and the exclusive OR processing result). For example, the concatenation sequence is the expanded base data, the digest data of the computation result, and the exclusive OR processing result from left to right. To be specific, the digest data of the computation result is concatenated after the expanded base data, and the exclusive OR processing result is concatenated after the digest data of the computation result. Assuming that a data length of the expanded base data is L2, the first L2 bits of the encrypted result are the expanded base data. The expanded base data is an r^{th} power of base data, r is a first random number, and the base data is data for calculating the first public key and the second public key. The first device may obtain an (***skₐ***)^{th} power of the expanded base data to obtain the first partial decrypted result, ***skₐ*** being the first private key corresponding to the first public key.

For example, the first device may calculate the first partial decrypted result by using the following formula (9): ${R}_{a} = {\left({g}^{r}\right)}^{s {k}_{a}}$ (9)

In formula (9), ***Rₐ*** is the first partial decrypted result.

Similarly, that the second device decrypts the encrypted result according to a second private key corresponding to the second public key to obtain a second partial decrypted result includes: The second device may extract the expanded base data from the encrypted result according to the concatenation sequence and the data length of each piece of data (namely, the expanded base data, the digest data of the computation result, and the exclusive OR processing result), the expanded base data being the r^{th} power of the base data, r being the first random number, and the base data being used for calculating the first public key and the second public key; and obtain an (*sk_{b}*)^{th} power of the expanded base data to obtain the second partial decrypted result, *sk_{b}* being the second private key corresponding to the second public key.

For example, the second device may calculate the second partial decrypted result by using the following formula (10): ${R}_{b} = {\left({g}^{r}\right)}^{{sk}_{b}}$ (10)

In formula (10), *R_{b}* is the second partial decrypted result.

In an embodiment, the performing aggregate decryption on the encrypted result according to the first partial decrypted result and the second partial decrypted result, to obtain the computation result may include: The first device may extract the digest data of the computation result and the exclusive OR processing result from the encrypted result according to the concatenation sequence and the data length of each piece of data (namely, the expanded base data, the digest data of the computation result, and the exclusive OR processing result), the exclusive OR processing result being obtained by performing exclusive OR processing on a random byte stream and the computation result. For example, the concatenation sequence is the expanded base data, the digest data of the computation result, and the exclusive OR processing result from left to right. To be specific, the digest data of the computation result is concatenated after the expanded base data, and the exclusive OR processing result is concatenated after the digest data of the computation result. Assuming that a data length of the expanded base data is 5, a data length of the digest data of the computation result is 10, and a data length of the exclusive OR processing result is 10, the first 5 bits of the encrypted result are the expanded base data, the 6^{th} bit to the 15^{th} bit of the encrypted result are the digest data of the computation result, and the 16^{th} bit to the 25^{th} bit of the computation result are the exclusive OR processing result. The first device may multiply the first partial decrypted result and the second partial decrypted result to obtain a transformed public key; perform expansion processing on the transformed public key according to a data length of the exclusive OR processing result, to obtain the random byte stream, the data length of the exclusive OR processing result being the same as the data length of the computation result; and determine the computation result according to the exclusive OR processing result, the random byte stream, the transformed public key, and the digest data of the computation result. The first service party and the second service party participate in the aggregate decryption process of the encrypted result, which helps to ensure joint ownership of the computation result, ensure that the computation result is secure and controllable, and improve security of the computation result.

In an embodiment, the determining the computation result according to the exclusive OR processing result, the random byte stream, the transformed public key, and the digest data of the computation result includes: The first device performs exclusive OR processing on the exclusive OR processing result and the random byte stream to obtain an initial computation result; performs a hash operation on the initial computation result and the transformed public key to obtain a hash operation result; and determines the initial computation result as the computation result of the service data when the hash operation result matches the digest data of the computation result. When the hash operation result does not match the digest data of the computation result, the decryption of the computation result fails, and the decryption failure is returned to the second device, so that a new second partial decrypted result is returned. Alternatively, the decryption failure may be returned to the third device corresponding to a trusted third party, so that aggregate encryption is reperformed on the computation result to obtain an encrypted result. The first service party and the second service party participate in the aggregate decryption process of the encrypted result, which helps to ensure joint ownership of the computation result, ensure that the computation result is secure and controllable, and improve security of the computation result.

For example, the first device may calculate the transformed public key based on the following formula (11): $PK * = {R}_{a} ⋅ {R}_{b} = {\left({g}^{r}\right)}^{{sk}_{a}} ⋅ {\left({g}^{r}\right)}^{{sk}_{b}} = {{PK}_{a}}^{r} ⋅ {{PK}_{b}}^{r} = {{PK}_{t}}^{r}$ (11)

Further, *PK** is expanded by using a key derivation function into the random byte stream whose data length is the same as the data length of the computation result. Exclusive OR processing is performed on the exclusive OR processing result and the random byte stream to obtain the initial computation result. The initial computation result may be expressed by using the following formula (12): $m 3 = k ⊕ c$ (12)

In formula (12), *m*3 is the initial computation result, *k* is the random byte stream, and *c* is the exclusive OR processing result. A hash operation is performed on the initial computation result and the transformed public key to obtain a hash operation result. The hash operation result may be expressed by using the following formula (13): $H = Hash \left(PK*,m3\right)$ (13)

In formula (13), H indicates the hash operation result. To be specific, the hash operation result is a hash value. When the hash operation result is the same as the digest, *m*3 is determined as the computation result.

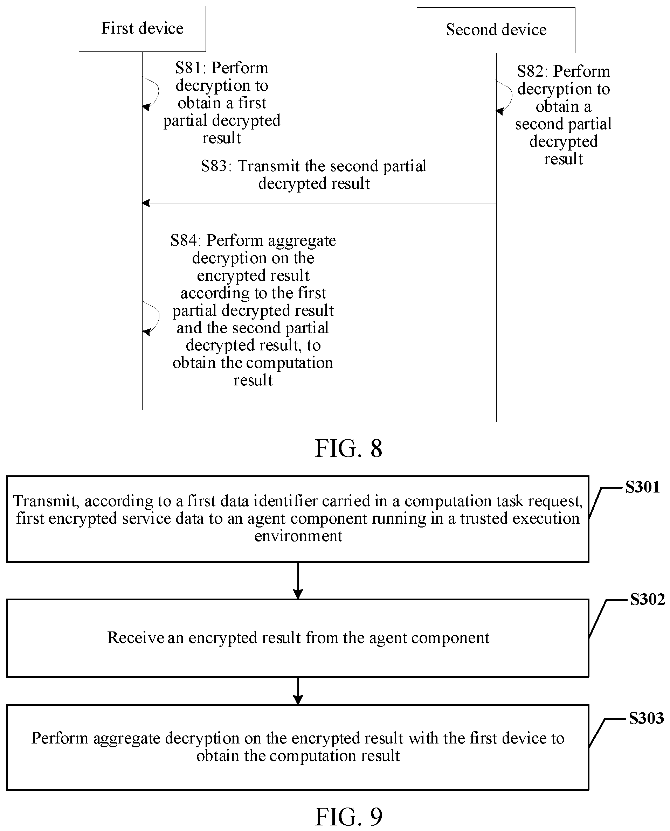

For example, a decryption process of the encrypted result is shown in FIG. 8. The decryption process includes the following operations S81 to S84:
S81: The first device performs decryption to obtain the first partial decrypted result. To be specific, the first device may decrypt the encrypted result according to the first private key of the first service party, to obtain the first partial decrypted result. For a specific implementation process, refer to the foregoing descriptions.

S82: The second device performs decryption to obtain the second partial decrypted result. To be specific, the second device may decrypt the encrypted result according to the second private key of the second service party, to obtain the second partial decrypted result. For a specific implementation process, refer to the foregoing descriptions.

S83: The second device transmits the second partial decrypted result to the first device. When the second device determines that the service data is unable to be restored based on the executable file, the second device may transmit the second partial decrypted result to the first device, to authorize the first service party to use the computation result.

S84: The first device performs aggregate decryption on the encrypted result according to the first partial decrypted result and the second partial decrypted result, to obtain the computation result.

In conclusion, only when the second service party authorizes the first service party to use the computation result, the first device can perform aggregate decryption on the encrypted result based on the first partial decrypted result and the second partial decrypted result, to obtain the computation result. This can ensure joint ownership of the computation result by the first service party and the second service party, ensure that the computation result is secure and controllable, and improve security of the service data and the computation result.

In this disclosure, the first device obtains the second partial decrypted result from the second device, and decrypts the encrypted result based on the first partial decrypted result and the second partial decrypted result to obtain the computation result, which can ensure joint ownership of the computation result by the first service party and the second service party, ensure that the computation result is secure and controllable, and improve security of the computation result.

Further, FIG. 9 is a schematic flowchart of still another data processing method according to an embodiment of this disclosure. As shown in FIG. 9, the method may be executed by a device corresponding to a second service party. The device corresponding to the second service party may be the terminal in FIG. 1, the server in FIG. 1, or a terminal and a server. In this disclosure, devices corresponding to the second service party may be collectively referred to as a second device. The method may include the following operations:

S301: Transmit, according to a first data identifier carried in a computation task request, first encrypted service data to an agent component running in a trusted execution environment.

The computation task request is transmitted by a first device corresponding to a first service party to the agent component, the computation task request includes an executable file for executing a computing operation on first service data and the first data identifier of the first encrypted service data corresponding to the first service data, and the agent component is configured to decrypt the first encrypted service data to obtain the first service data.

In this disclosure, the second device may receive the computation task request transmitted by the first device, or receive the computation task request transmitted by a third device; and transmit, according to the first data identifier in the computation task request, the first encrypted service data to the agent component running in the trusted execution environment of a trusted third party.

S302: Receive an encrypted result from the agent component.

The encrypted result is obtained by the agent component by performing aggregate encryption on a computation result according to a first public key of the first device and a second public key of the second device. The computation result is obtained by executing a computing operation on the first service data according to the executable file by the computation task component running in the trusted execution environment.

S303: Perform aggregate decryption on the encrypted result with the first device to obtain the computation result.

In this disclosure, the second device and the first device may jointly perform aggregate decryption on the encrypted result to obtain the computation result. This helps to ensure joint ownership of the computation result by the first service party and the second service party, and ensure that the computation result is secure and controllable.

In an embodiment, the foregoing operation S303 includes: decrypting the encrypted result according to a second private key corresponding to the second public key to obtain a second partial decrypted result when determining that the first service data is unable to be restored based on the executable file; and transmitting the second partial decrypted result to the first device corresponding to the first service party.

The first device is configured to perform aggregate decryption on the encrypted result according to a first partial decrypted result and the second partial decrypted result, to obtain the computation result. The first partial decrypted result is obtained by the first device by decrypting the encrypted result based on a first private key corresponding to the first public key.

The executable file in the second device corresponding to the second service party is transmitted from the first device or the agent component to the second device.

In an embodiment, the determining that the first service data is unable to be restored based on the executable file includes: The second device may obtain, from the executable file, computing information corresponding to the computing operation on the first service data. The computing information may include a computing manner, a computing duration, etc., for the first service data. The second device may determine, according to the computing information, computing complexity corresponding to the computing operation on the first service data; and determine that the first service data is unable to be restored based on the executable file when the computing complexity is greater than a complexity threshold. Whether the first service data can be restored from the executable file is determined based on the computing complexity of the first service data, which prevents the first service party from obtaining unencrypted service data of the second service party, thereby improving security of the service data.

The complexity threshold may be preset, or the complexity threshold may be determined depending on an application scenario. For example, if privacy of the first service data is high in the application scenario, a first value is determined as the complexity threshold; if privacy of the first service data in the application scenario is low, a second value is determined as the complexity threshold, the first value being greater than the second value.

When the computing information includes a computing duration, the computing complexity corresponding to the computing operation on the service data may be determined according to the computing duration. To be specific, a longer computing duration indicates higher computing complexity. Otherwise, a shorter computing duration indicates lower computing complexity. When the computing information includes a computing manner and a computing duration corresponding to each computing manner, the second device may obtain a weight corresponding to each computing manner; weight, by using the weight corresponding to the computing manner, the computing duration corresponding to the computing manner, to obtain a weighted computing duration; and sum weighted computing durations respectively corresponding to the computing manners, to obtain the computing complexity corresponding to the computing operation on the service data. The weight corresponding to the computing manner may be preset. For example, weights corresponding to computing manners of multiplication and division are greater than weights corresponding to computing manners of subtraction and addition.

In an embodiment, the second device may encrypt the first service data according to a symmetric key, to obtain first encrypted service data. Specifically, the second device may generate the symmetric key according to base data, a third public key of the trusted third party, and the second private key; determine an x^{th} power of the base data as a first coordinate value associated with the base data in an elliptic curve group, x is being a second random number; encrypt the first service data according to the symmetric key and the first coordinate value, to obtain the first encrypted service data; perform a hash operation on the first encrypted service data to obtain the data identifier of the first encrypted service data; and transmitting the data identifier of the encrypted service data to the first device corresponding to the first service party, to authorize the first service party with a computing request permission for the service data. The second device encrypts the service data, which can avoid leaking the service data in a transmission process, thereby improving security of the service data.

In an embodiment, the generating the symmetric key according to base data, a third public key of the trusted third party, and the second private key includes: The second device may determine an x^{th} power of the third public key of the trusted third party as a second coordinate value associated with the third public key in the elliptic curve group; determine an (*sk_{b}*)^{th} power of the third public key of the trusted third party as a third coordinate value associated with the third public key in the elliptic curve group, *sk_{b}* being the second private key; and perform a hash operation on the third public key, the second public key, the first coordinate value, the second coordinate value, and the third coordinate value to obtain the symmetric key. The symmetric key is generated to encrypt the service data, so that the third device can decrypt the encrypted service data based on the same symmetric key, which facilitates decryption.

Herein, the second coordinate value is a vertical-axis coordinate value of a point on an elliptic curve to which the third public key is mapped in the elliptic curve group, and the third coordinate value is a vertical-axis coordinate value of a point on an elliptic curve to which the third public key is mapped in the elliptic curve group. The third public key is calculated based on the base data and the third private key. Therefore, a second coordinate value associated with the third private key in the elliptic curve group is the same as the second coordinate value associated with the third public key in the elliptic curve group, and a third coordinate value associated with the third private key in the elliptic curve group is the same as the third coordinate value associated with the third public key in the elliptic curve group.

In an embodiment, the encrypting the first service data according to the symmetric key and the first coordinate value, to obtain the first encrypted service data includes: The second device may encrypt the first service data according to the symmetric key, to obtain ciphertext data of the service data; and concatenate the ciphertext data of the service data and the first coordinate value to obtain the first encrypted service data. In this way, the third device can calculate the symmetric key based on the first coordinate value in the encrypted service data and the private key of the third device, and decrypt the ciphertext data of the service data to obtain the first service data, which facilitates decryption.

For example, the second device may generate a random number according to a random algorithm, and calculate the first coordinate value, the second coordinate value, and the third coordinate value according to the random number, the second private key, and the third public key. The first coordinate value, the second coordinate value, and the third coordinate value may be represented by using the following formula (14): $X = {g}^{x} , Y = {\left({PK}_{c}\right)}^{x} , Z = {\left({PK}_{c}\right)}^{{sk}_{b}}$ (14)

A relationship between the third private key and the third public key is (*sk_{c}*, *PK_{c}* = *g^{sk_{c}}*), and a relationship between the second public key and the second private key is (*sk_{b}*, *PK_{b}* = *g^{sk_{b}}*). Therefore, *Y* in formula (14) and *Y* in formula (2) have the same value, and *Z* in formula (14) and *Z* in formula (2) have the same value. The second device may perform a hash operation on the third public key, the second public key, the first coordinate value, the second coordinate value, and the third coordinate value to obtain the symmetric key. The symmetric key may be represented by using the foregoing formula (3). The first service data *m*1 is encrypted by invoking a symmetric encryption algorithm *Enc_{K}*(·) to obtain the ciphertext data of the service data, and the first coordinate value and the ciphertext data of the service data are concatenated to obtain the first encrypted service data. The first encrypted service data may be represented by using the foregoing formula (1).

For the second service party, the symmetric key is generated according to parameters such as the third public key, the second private key, and the second random number. Therefore, if the second private key is leaked at a moment T, because the second random number is unknown, the first encrypted service data still is unable to be decrypted, so that forward security of the first service data can be ensured. The forward security means ensuring that encrypted service data of the second service party before the moment T is not leaked.

In this disclosure, the second device transmits the encrypted service data to the agent component, which can avoid leaking unencrypted service data in a transmission process, thereby improving security of the service data. The second device returns the second partial decrypted result to the first device only when determining that the first service data is unable to be restored based on the executable file, which can prevent the first service party from restoring the service data based on the executable file, to improve security of the service data, and can ensure joint ownership of the computation result by the first service party and the second service party, ensure that the computation result is secure and controllable, and improve security of the computation result and the service data.

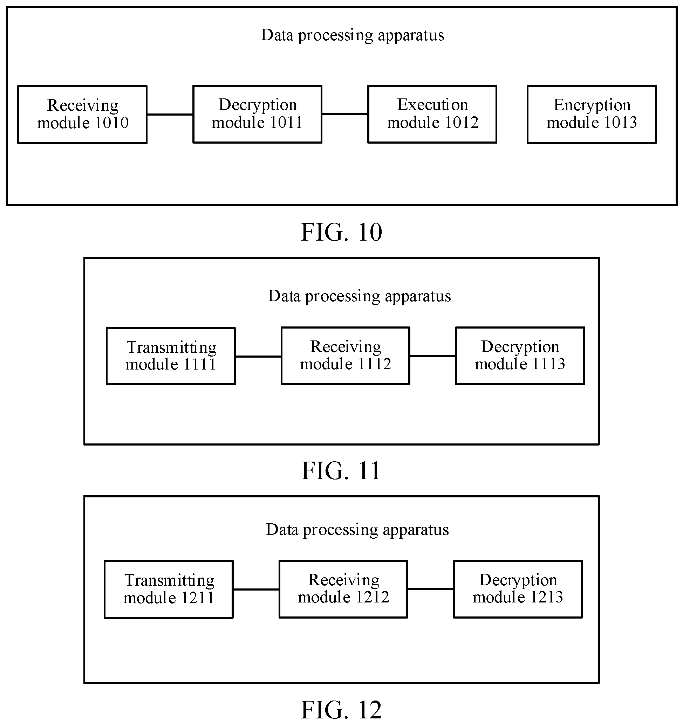

FIG. 10 is a schematic structural diagram of a data processing apparatus according to an embodiment of this disclosure. As shown in FIG. 10, the data processing apparatus may include:
a receiving module 1010, configured to receive, via an agent component running in a trusted execution environment comprised in the computer device, a computation task request transmitted by a first device, the computation task request comprising an executable file and a first data identifier of first encrypted service data, the executable file being used for executing a computing operation on first service data in a second device, and the first encrypted service data being obtained according to the first service data;
a decryption module 1011, configured to obtain, via the agent component and according to the first data identifier, the first encrypted service data from the second device, and decrypt the first encrypted service data to obtain the first service data;
an execution module 1012, configured to execute, via a computation task component running in the trusted execution environment, the computing operation on the first service data according to the executable file, to obtain a computation result; and
an encryption module 1013, configured to perform, via the agent component, aggregate encryption on the computation result according to a first public key of the first device and a second public key of the second device, to obtain an encrypted result and transmit the encrypted result to the first device and the second device, so that the first device and the second device perform aggregate decryption on the encrypted result to obtain the computation result.

The first device is configured to perform aggregate decryption on the encrypted result according to a first partial decrypted result and a second partial decrypted result, to obtain the computation result. The first partial decrypted result is obtained by the first device by decrypting the encrypted result based on a first private key corresponding to the first public key. The second partial decrypted result is transmitted to the first device by the second device when the second device determines that the first service data is unable to be restored based on the executable file, the second partial decrypted result is obtained by decrypting the encrypted result based on a second private key corresponding to the second public key, and the executable file in the second device is transmitted from the first device or the agent component to the second device.

In some embodiments, the encryption module 1013 is specifically configured to:
multiply the first public key of the first device and the second public key of the second device by using the agent component, to obtain a joint public key;
transform the joint public key according to a first random number, to obtain a transformed public key;
determine an r^{th} power of base data as expanded base data, r being the first random number, and the base data being used for calculating the first public key and the second public key; and
perform aggregate encryption on the computation result according to the expanded base data and the transformed public key, to obtain the encrypted result.

In some embodiments, the encryption module 1013 is specifically configured to:
perform a hash operation on the transformed public key and the computation result to obtain digest data of the computation result;
perform expansion processing on the transformed public key according to a data length of the computation result, to obtain a random byte stream;
perform exclusive OR processing on the random byte stream and the computation result to obtain an exclusive OR processing result; and
concatenate the expanded base data, the digest data, and the exclusive OR processing result to obtain the encrypted result.

In some embodiments, the first encrypted service data is obtained by concatenating ciphertext data of the first service data and a first coordinate value, the ciphertext data of the first service data being obtained by encrypting the first service data according to a symmetric key, and the first coordinate value being a coordinate value associated with the base data in an elliptic curve group.

In some embodiments, the decryption module 1011 is specifically configured to:
divide the first encrypted service data to obtain the first coordinate value and the ciphertext data of the first service data;
generate, according to the first coordinate value, the second public key, and a third private key of a trusted third party, a second coordinate value and a third coordinate value associated with the third private key in the elliptic curve group;
generate the symmetric key according to the first coordinate value, the second coordinate value, the third coordinate value, the second public key, and a third public key corresponding to the third private key; and
decrypt the ciphertext data of the first service data according to the symmetric key, to obtain the first service data.

In some embodiments, the computation task request further carries a second data identifier of second encrypted service data in the first device.

In some embodiments, the execution module 1012 is specifically configured to:
obtain, via the agent component, the second encrypted service data from the first device based on the second data identifier;
decrypt the second encrypted service data to obtain second service data; and
execute a computing operation on the second service data and the first service data according to the executable file, to obtain the computation result.

This disclosure has at least the following beneficial effects: (1) An agent component and a computation task component are deployed in a trusted execution environment of a trusted third party corresponding to service parties, and decryption and computing processes of first encrypted service data are both implemented by using the agent component and the computation task component in the trusted execution environment. Therefore, service data of the service parties is circulated through the trusted execution environment without creating an independent cluster for each service party or relying on dedicated hardware, which reduces service data circulation costs and facilitates a service data circulation process. In addition, the circulation process does not require manual participation, which improves service data circulation efficiency. (2) Aggregate encryption is performed on a computation result, so that a second service party transmits a second partial decrypted result obtained by the second service party to a first service party only when determining that original data (i.e., service data) is unable to be restored based on an executable file. In this way, the first service party can perform aggregate decryption on an encrypted result based on a first partial decrypted result obtained by the first service party and the received second partial decrypted result, to obtain the computation result. This can ensure joint ownership of the computation result by the first service party and the second service party, ensure that the computation result is secure and controllable, and improve security of the computation result.

FIG. 11 is a schematic structural diagram of another data processing apparatus according to an embodiment of this disclosure. As shown in FIG. 11, the data processing apparatus may include:
a transmitting module 1111, configured to transmit a computation task request to an agent component, the computation task request comprising an executable file and a first data identifier of first encrypted service data, the executable file being used for executing a computing operation on first service data in a second device, the first encrypted service data being obtained according to the first service data, and the agent component running in a trusted execution environment comprised in a third device and being configured to obtain the first encrypted service data from the second device according to the first data identifier, and decrypt the first encrypted service data to obtain the first service data;
a receiving module 1112, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module 1113, configured to perform aggregate decryption on the encrypted result with the second device to obtain the computation result.

In some embodiments, the decryption module 1113 is specifically configured to decrypt the encrypted result according to a first private key corresponding to the first public key to obtain a first partial decrypted result, and receive a second partial decrypted result from the second device, the second partial decrypted result being received from the second device when the second device determines that the first service data is unable to be restored based on the executable file, the second partial decrypted result being obtained by decrypting the encrypted result based on a second private key corresponding to the second public key, the encrypted result being transmitted to the second device by the agent component, and the executable file in the second device being transmitted from the first device or the agent component to the second device; and
the decryption module 1113 is further configured to perform aggregate decryption on the encrypted result according to the first partial decrypted result and the second partial decrypted result, to obtain the computation result.

In some embodiments, the decryption module 1113 is specifically configured to:
extract digest data of the computation result and an exclusive OR processing result from the encrypted result, the exclusive OR processing result being obtained by performing exclusive OR processing on a random byte stream and the computation result;
multiply the first partial decrypted result and the second partial decrypted result to obtain a transformed public key;
perform expansion processing on the transformed public key according to a data length of the exclusive OR processing result, to obtain the random byte stream; and
determine the computation result according to the exclusive OR processing result, the random byte stream, the transformed public key, and the digest data of the computation result.

In some embodiments, the decryption module 1113 is specifically configured to:
perform exclusive OR processing on the exclusive OR processing result and the random byte stream to obtain an initial computation result;
perform a hash operation on the initial computation result and the transformed public key to obtain a hash operation result; and
determine the initial computation result as the computation result of the service data when the hash operation result matches the digest data of the computation result.

In some embodiments, the decryption module 1113 is specifically configured to:
extract expanded base data from the encrypted result, the expanded base data being an r^{th} power of base data, r being a first random number, and the base data being used for calculating the first public key and the second public key; and
obtain an (*skₐ*)^{th} power of the expanded base data to obtain the first partial decrypted result, *skₐ* being the first private key corresponding to the first public key.

In this disclosure, the first device obtains the second partial decrypted result from the second device, and decrypts the encrypted result based on the first partial decrypted result and the second partial decrypted result to obtain the computation result, which can ensure joint ownership of the computation result by the first service party and the second service party, ensure that the computation result is secure and controllable, and improve security of the computation result.

FIG. 12 is a schematic structural diagram of still another data processing apparatus according to an embodiment of this disclosure. As shown in FIG. 12, the data processing apparatus may include:
a transmitting module 1211, configured to transmit, according to a first data identifier carried in a computation task request, first encrypted service data to an agent component, the computation task request being transmitted from a first device to the agent component, the computation task request comprising an executable file and the first data identifier of the first encrypted service data, the executable file being used for executing a computing operation on first service data in the second device, the first encrypted service data being obtained according to the first service data, and the agent component running in a trusted execution environment comprised in a third device and being configured to decrypt the first encrypted service data to obtain the first service data;
a receiving module 1212, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module 1213, configured to perform aggregate decryption on the encrypted result with the first device to obtain the computation result.

In some embodiments, the decryption module 1213 is specifically configured to decrypt the encrypted result according to a second private key corresponding to the second public key to obtain a second partial decrypted result when it is determined that the first service data is unable to be restored based on the executable file, the executable file in the second device corresponding to a second service party being transmitted from the first device or the agent component to the second device; and
the transmitting module 1211 is further configured to transmit the second partial decrypted result to the first device corresponding to a first service party, the first device being configured to perform aggregate decryption on the encrypted result according to a first partial decrypted result and the second partial decrypted result, to obtain the computation result, and the first partial decrypted result being obtained by the first device by decrypting the encrypted result based on a first private key corresponding to the first public key.

In some embodiments, the decryption module 1213 is specifically configured to:
extract expanded base data from the encrypted result, the expanded base data being an r^{th} power of base data, r being a first random number, and the base data being used for calculating the first public key and the second public key; and
obtain an (*sk_{b}*)^{th} power of the expanded base data to obtain the second partial decrypted result, *sk_{b}* being the second private key corresponding to the second public key.

In some embodiments, the decryption module 1213 is specifically configured to:
obtain, from the executable file, computing information corresponding to the computing operation on the first service data;
determine, according to the computing information, computing complexity corresponding to the computing operation on the first service data; and
determine that the first service data is unable to be restored based on the executable file when the computing complexity is greater than a complexity threshold.

In some embodiments, the transmitting module 1211 is specifically configured to generate a symmetric key according to the base data, a third public key of a trusted third party, and the second private key;
determine an x^{th} power of the base data as a first coordinate value associated with the base data in an elliptic curve group, x is being a second random number;
encrypt the first service data according to the symmetric key and the first coordinate value, to obtain the first encrypted service data;
perform a hash operation on the first encrypted service data to obtain the data identifier of the first encrypted service data; and
transmit the data identifier of the first encrypted service data to the first device corresponding to the first service party.

In some embodiments, the transmitting module 1211 is specifically configured to:
determine an x^{th} power of the third public key of the trusted third party as a second coordinate value associated with the third public key in the elliptic curve group;
determine an (*sk_{b}*)^{th} power of the third public key of the trusted third party as a third coordinate value associated with the third public key in the elliptic curve group, *sk_{b}* being the second private key; and
perform a hash operation on the third public key, the second public key, the first coordinate value, the second coordinate value, and the third coordinate value to obtain the symmetric key.

In this disclosure, the second device transmits the encrypted service data to the agent component, which can avoid leaking unencrypted service data in a transmission process, thereby improving security of the service data. The second device returns the second partial decrypted result to the first device only when determining that the first service data is unable to be restored based on the executable file, which can prevent the first service party from restoring the service data based on the executable file, to improve security of the service data, and can ensure joint ownership of the computation result by the first service party and the second service party, ensure that the computation result is secure and controllable, and improve security of the computation result and the service data.

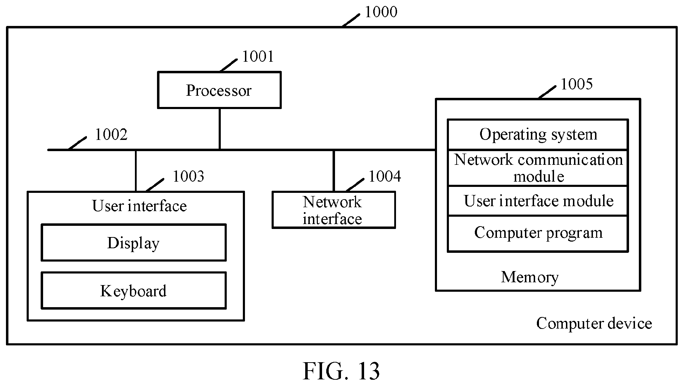

FIG. 13 is a schematic structural diagram of a computer device according to an embodiment of this disclosure. As shown in FIG. 13, the computer device 1000 may be a terminal or a server, including a processor 1001, a network interface 1004, and a memory 1005. In addition, the computer device 1000 may further include a user interface 1003 and at least one communication bus 1002. The communication bus 1002 is configured to implement connection and communication between these components. In some embodiments, the user interface 1003 may include a display and a keyboard. In some embodiments, the network interface 1004 may include a standard wired interface or wireless interface (e.g., a Wi-Fi interface). The memory 1005 may be a high-speed RAM, or may be a non-volatile memory, for example, at least one magnetic disk storage. In some embodiments, the memory 1005 may be at least one storage apparatus located far away from the processor 1001. As shown in FIG. 13, the memory 1005 as a computer-readable storage medium may include an operating system, a network communication module, a user interface module, and a computer program.

In the computer device 1000 shown in FIG. 13, the network interface 1004 may provide a network communication function, the user interface 1003 is mainly configured to provide an input interface, and the processor 1001 may be configured to invoke the computer program stored in the memory 1005, to implement operations in the method embodiments of this disclosure.

This disclosure has at least the following beneficial effects: (1) An agent component and a computation task component are deployed in a trusted execution environment of a trusted third party corresponding to service parties, and decryption and computing processes of first encrypted service data are both implemented by using the agent component and the computation task component in the trusted execution environment. Therefore, service data of the service parties is circulated through the trusted execution environment without creating an independent cluster for each service party or relying on dedicated hardware, which reduces service data circulation costs and facilitates a service data circulation process. In addition, the circulation process does not require manual participation, which improves service data circulation efficiency. (2) Aggregate encryption is performed on a computation result, so that a second service party transmits a second partial decrypted result obtained by the second service party to a first service party only when determining that original data (i.e., service data) is unable to be restored based on an executable file. In this way, the first service party can perform aggregate decryption on an encrypted result based on a first partial decrypted result obtained by the first service party and the received second partial decrypted result, to obtain the computation result. This can ensure joint ownership of the computation result by the first service party and the second service party, ensure that the computation result is secure and controllable, and improve security of the computation result.

The computer device in this embodiment of this disclosure can execute content described in the data processing method in the corresponding embodiments, as well as content described in the data processing apparatus in the corresponding embodiments. Details are not described herein again. In addition, beneficial effects achieved by using the same method are not described herein again.

During practical application, collection and processing of relevant data in this disclosure need to strictly comply with requirements of relevant laws and regulations to obtain informed consent or separate consent of personal information subjects, and subsequent data use and processing behavior is carried out within the scope authorized by the laws and regulations and the personal information subjects.

In addition, an embodiment of this disclosure further provides a computer-readable storage medium. The computer-readable storage medium has a computer program executed by the above-mentioned data processing apparatus stores therein. The computer program includes program instructions. When executing the program instructions, a processor can execute content described in the data processing method in the corresponding embodiments. Therefore, details are not described herein again. In addition, beneficial effects achieved by using the same method are not described herein again. For technical details that are not disclosed in the computer-readable storage medium embodiment of this disclosure, refer to the descriptions of the method embodiments of this disclosure.

In an example, the program instructions may be deployed for execution on one computer device, at least two computer devices at one location, or at least two computer devices distributed at at least two locations and interconnected through a communication network. The at least two computer devices distributed at the at least two locations and interconnected through the communication network can form a blockchain network.

The computer-readable storage medium may be an internal storage unit of the data processing apparatus according to any one of the foregoing embodiments or the computer device, e.g., a hard disk drive or an internal memory of the computer device. Alternatively, the computer-readable storage medium may be an external storage device of the computer device, e.g., a plug-in hard disk drive, a smart media card (SMC), a secure digital (SD) card, or a flash card equipped on the computer device. Further, the computer-readable storage medium may include both the internal storage unit and the external storage device of the computer device. The computer-readable storage medium is configured to store the computer program and other programs and data required by the computer device. The computer-readable storage medium may be further configured to temporarily store data that has been or is to be output.

The terms such as "first" and "second" in the specification, claims, and accompanying drawings of embodiments of this disclosure are intended for distinguishing between different media content, instead of describing a specific sequence. In addition, the term "include" or any other variant thereof is intended to cover a non-exclusive inclusion. For example, a process, method, apparatus, product, or device including a series of steps or units is not limited to the listed steps or modules, but can further include steps or modules that are not listed, or other steps or units inherent to the process, method, apparatus, product, or device.

In embodiments of this disclosure, the term "module" or "unit" is a computer program or a part of computer program with a predetermined function, which cooperates with another related part to achieve a predetermined objective, and may be completely or partially implemented using software, hardware (such as a processing circuit or a memory), or a combination thereof. Similarly, one processor (or a plurality of processors or memories) may be configured to implement one or more modules or units. Furthermore, each module or unit may be a part of an integrated module or unit that includes functionality of the module or unit.

During practical application, collection and processing of relevant data in this disclosure need to strictly comply with requirements of relevant laws and regulations to obtain informed consent or separate consent of personal information subjects, and subsequent data use and processing behavior is carried out within the scope authorized by the laws and regulations and the personal information subjects.

An embodiment of this disclosure further provides a computer program product, including a computer program. The computer program, when executed by a processor, implements content described in the data processing method in the corresponding embodiments. Therefore, details are not described herein. In addition, beneficial effects achieved by using the same method are not described herein again. For technical details that are not disclosed in the computer program product embodiment of this disclosure, refer to the descriptions of the method embodiments of this disclosure.

A person of ordinary skill in the art may be aware that, in combination with the examples described in embodiments disclosed in this specification, units, algorithms, and steps can be implemented by electronic hardware, computer software, or a combination thereof. To clearly describe interchangeability between the hardware and the software, the foregoing has generally described compositions and steps of the examples according to functions. Whether the functions are executed by hardware or software depends on particular applications and design constraints of the technical solutions. A person skilled in the art may use different methods to implement the described functions for each particular application, but it is not to be considered that the implementation goes beyond the scope of this disclosure.

The method and related apparatus according to embodiments of this disclosure are described with reference to the method flowcharts and/or the schematic structural diagrams according to embodiments of this disclosure. Specifically, each procedure and/or block in the method flowcharts and/or the schematic structural diagrams and a combination of procedures and/or blocks in the flowcharts and/or the block diagrams may be implemented using computer program instructions. These computer program instructions may be provided to a processor of a general-purpose computer, a dedicated computer, an embedded processor, or other programmable network-connected devices, to produce a machine, so that the instructions executed by the processor of the computer or other programmable network-connected devices generate an apparatus for implementing functions specified in one or more procedures of the flowcharts and/or one or more blocks of the schematic structural diagrams. These computer program instructions may alternatively be stored in a computer-readable memory that can guide a computer or other programmable network-connected devices to operate in a particular way, so that the instructions stored in the computer-readable memory produce an article of manufacture including an instruction apparatus, and the instruction apparatus implements functions specified in one or more procedures of the flowcharts and/or one or more blocks of the schematic structural diagrams. These computer program instructions may alternatively be loaded to a computer or other programmable network-connected devices, so that a series of operation steps are executed on the computer or other programmable devices, to produce computer-implemented processing, and the instructions executed on the computer or other programmable devices provide steps for implementing functions specified in one or more procedures of the flowcharts and/or one or more blocks of the schematic structural diagrams.

What is disclosed above is merely exemplary embodiments of this disclosure, and certainly is not intended to limit the scope of the claims of this disclosure. Therefore, equivalent variations made in accordance with the claims of this disclosure shall fall within the scope of this disclosure.

## Claims

1. A data processing method, executable by a computer device, comprising:
receiving, via an agent component running in a trusted execution environment comprised in the computer device, a computation task request transmitted by a first device, the computation task request comprising an executable file and a first data identifier of first encrypted service data, the executable file being used for executing a computing operation on first service data in a second device, and the first encrypted service data being obtained according to the first service data;
obtaining, via the agent component and according to the first data identifier, the first encrypted service data from the second device, and decrypting the first encrypted service data to obtain the first service data;
executing, via a computation task component running in the trusted execution environment, the computing operation on the first service data according to the executable file, to obtain a computation result; and
performing, via the agent component, aggregate encryption on the computation result according to a first public key of the first device and a second public key of the second device, to obtain an encrypted result and transmit the encrypted result to the first device and the second device, so that the first device and the second device perform aggregate decryption on the encrypted result to obtain the computation result.

2. The method according to claim 1, wherein the first device performs aggregate decryption on the encrypted result according to a first partial decrypted result and a second partial decrypted result, to obtain the computation result;
the first partial decrypted result being obtained by the first device by decrypting the encrypted result based on a first private key corresponding to the first public key; and
the second partial decrypted result being transmitted to the first device by the second device when the second device determines that the first service data is unable to be restored based on the executable file, the second partial decrypted result being obtained by decrypting the encrypted result based on a second private key corresponding to the second public key, and the executable file in the second device being received from the first device or the agent component.

3. The method according to claim 1 or 2, wherein the performing, via the agent component, aggregate encryption on the computation result according to a first public key of the first device and a second public key of the second device, to obtain an encrypted result comprises:
multiplying the first public key of the first device and the second public key of the second device, to obtain a joint public key;
transforming the joint public key according to a first random number, to obtain a transformed public key;
determining an r^{th} power of base data as expanded base data, r being the first random number, and the base data being used for calculating the first public key and the second public key; and
performing aggregate encryption on the computation result according to the expanded base data and the transformed public key, to obtain the encrypted result.

4. The method according to claim 3, wherein the performing aggregate encryption on the computation result according to the expanded base data and the transformed public key, to obtain the encrypted result comprises:
performing a hash operation on the transformed public key and the computation result to obtain digest data of the computation result;
performing expansion processing on the transformed public key according to a data length of the computation result, to obtain a random byte stream;
performing exclusive OR processing on the random byte stream and the computation result to obtain an exclusive OR processing result; and
concatenating the expanded base data, the digest data, and the exclusive OR processing result to obtain the encrypted result.

5. The method according to any one of claims 1 to 4, wherein the first encrypted service data is obtained by concatenating ciphertext data of the first service data and a first coordinate value, the ciphertext data of the first service data being obtained by encrypting the first service data according to a symmetric key, and the first coordinate value being a coordinate value associated with the base data in an elliptic curve group; and
the decrypting the first encrypted service data to obtain the first service data comprises:
dividing the first encrypted service data to obtain the first coordinate value and the ciphertext data of the first service data;
generating, according to the first coordinate value, the second public key, and a third private key of a trusted third party, a second coordinate value and a third coordinate value associated with the third private key in the elliptic curve group;
generating the symmetric key according to the first coordinate value, the second coordinate value, the third coordinate value, the second public key, and a third public key corresponding to the third private key; and
decrypting the ciphertext data of the first service data according to the symmetric key, to obtain the first service data.

6. The method according to any one of claims 1 to 5, wherein the computation task request further carries a second data identifier of second encrypted service data in the first device; and
the method further comprising:
obtaining, via the agent component, the second encrypted service data from the first device based on the second data identifier;
decrypting the second encrypted service data to obtain second service data; and
the executing, via a computation task component running in the trusted execution environment, the computing operation on the first service data according to the executable file, to obtain a computation result comprises:
executing a computing operation on the second service data and the first service data according to the executable file, to obtain the computation result.

7. A data processing method, executable by a first device, comprising:
transmitting a computation task request to an agent component, the computation task request comprising an executable file and a first data identifier of first encrypted service data, the executable file being used for executing a computing operation on first service data in a second device, the first encrypted service data being obtained according to the first service data, and the agent component running in a trusted execution environment comprised in a third device and being configured to obtain the first encrypted service data from the second device according to the first data identifier, and decrypt the first encrypted service data to obtain the first service data;
receiving an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
performing aggregate decryption on the encrypted result with the second device to obtain the computation result.

8. The method according to claim 7, wherein the performing aggregate decryption on the encrypted result with the second device to obtain the computation result comprises:
decrypting the encrypted result according to a first private key corresponding to the first public key to obtain a first partial decrypted result, and receiving a second partial decrypted result from the second device, the second partial decrypted result being received from the second device when the second device determines that the first service data is unable to be restored based on the executable file, the second partial decrypted result being obtained by decrypting the encrypted result based on a second private key corresponding to the second public key, the encrypted result being transmitted to the second device by the agent component, and the executable file in the second device being transmitted from the first device or the agent component to the second device; and
performing aggregate decryption on the encrypted result according to the first partial decrypted result and the second partial decrypted result, to obtain the computation result.

9. The method according to claim 8, wherein the performing aggregate decryption on the encrypted result according to the first partial decrypted result and the second partial decrypted result, to obtain the computation result comprises:
extracting digest data of the computation result and an exclusive OR processing result from the encrypted result, the exclusive OR processing result being obtained by performing exclusive OR processing on a random byte stream and the computation result;
multiplying the first partial decrypted result and the second partial decrypted result to obtain a transformed public key;
performing expansion processing on the transformed public key according to a data length of the exclusive OR processing result, to obtain the random byte stream; and
determining the computation result according to the exclusive OR processing result, the random byte stream, the transformed public key, and the digest data of the computation result.

10. The method according to claim 9, wherein the determining the computation result according to the exclusive OR processing result, the random byte stream, the transformed public key, and the digest data of the computation result comprises:
performing exclusive OR processing on the exclusive OR processing result and the random byte stream to obtain an initial computation result;
performing a hash operation on the initial computation result and the transformed public key to obtain a hash operation result; and
determining the initial computation result as the computation result of the service data when the hash operation result matches the digest data of the computation result.

11. The method according to any one of claims 7 to 10, wherein the decrypting the encrypted result according to a first private key corresponding to the first public key to obtain a first partial decrypted result comprises:
extracting expanded base data from the encrypted result, the expanded base data being an r^{th} power of base data, r being a first random number, and the base data being used for calculating the first public key and the second public key; and
obtaining an (*skₐ*)^{th} power of the expanded base data to obtain the first partial decrypted result, *skₐ* being the first private key corresponding to the first public key.

12. A data processing method, executable by a second device, comprising:
transmitting, according to a first data identifier carried in a computation task request, first encrypted service data to an agent component, the computation task request being transmitted from a first device to the agent component, the computation task request comprising an executable file and the first data identifier of the first encrypted service data, the executable file being used for executing a computing operation on first service data in the second device, the first encrypted service data being obtained according to the first service data, and the agent component running in a trusted execution environment comprised in a third device and being configured to decrypt the first encrypted service data to obtain the first service data;
receiving an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
performing aggregate decryption on the encrypted result with the first device to obtain the computation result.

13. The method according to claim 12, wherein the performing aggregate decryption on the encrypted result with the first device to obtain the computation result comprises:
decrypting the encrypted result according to a second private key corresponding to the second public key to obtain a second partial decrypted result when determining that the first service data is unable to be restored based on the executable file, the executable file being transmitted from the first device or the agent component to the second device; and
transmitting the second partial decrypted result to the first device, the first device being configured to perform aggregate decryption on the encrypted result according to a first partial decrypted result and the second partial decrypted result, to obtain the computation result, and the first partial decrypted result being obtained by the first device by decrypting the encrypted result based on a first private key corresponding to the first public key.

14. The method according to claim 13, wherein the decrypting the encrypted result according to a second private key corresponding to the second public key to obtain a second partial decrypted result comprises:
extracting expanded base data from the encrypted result, the expanded base data being an r^{th} power of base data, r being a first random number, and the base data being used for calculating the first public key and the second public key; and
obtaining an (*sk_{b}*)^{th} power of the expanded base data to obtain the second partial decrypted result, *sk_{b}* being the second private key corresponding to the second public key.

15. The method according to claim 13, wherein the determining that the first service data is unable to be restored based on the executable file comprises:
obtaining, from the executable file, computing information corresponding to the computing operation on the first service data;
determining, according to the computing information, computing complexity corresponding to the computing operation on the first service data; and
determining that the first service data is unable to be restored based on the executable file when the computing complexity is greater than a complexity threshold.

16. The method according to any one of claims 12 to 15, further comprising:
generating a symmetric key according to the base data, a third public key of a trusted third party, and the second private key;
determining an x^{th} power of the base data as a first coordinate value associated with the base data in an elliptic curve group, x is being a second random number;
encrypting the first service data according to the symmetric key and the first coordinate value, to obtain the first encrypted service data;
performing a hash operation on the first encrypted service data to obtain the data identifier of the first encrypted service data; and
transmitting the data identifier of the first encrypted service data to the first device.

17. The method according to claim 16, wherein the generating a symmetric key according to the base data, a third public key of a trusted third party, and the second private key comprises:
determining an x^{th} power of the third public key of the trusted third party as a second coordinate value associated with the third public key in the elliptic curve group;
determining an (*sk_{b}*)^{th} power of the third public key of the trusted third party as a third coordinate value associated with the third public key in the elliptic curve group, *sk_{b}* being the second private key; and
performing a hash operation on the third public key, the second public key, the first coordinate value, the second coordinate value, and the third coordinate value to obtain the symmetric key.

18. A data processing apparatus, comprising:
a receiving module, configured to receive, via an agent component running in a trusted execution environment comprised in the computer device, a computation task request transmitted by a first device, the computation task request comprising an executable file and a first data identifier of first encrypted service data, the executable file being used for executing a computing operation on first service data in a second device, and the first encrypted service data being obtained according to the first service data;
a decryption module, configured to obtain, via the agent component and according to the first data identifier, the first encrypted service data from the second device, and decrypt the first encrypted service data to obtain the first service data;
an execution module, configured to execute, via a computation task component running in the trusted execution environment, the computing operation on the first service data according to the executable file, to obtain a computation result; and
an encryption module, configured to perform, via the agent component, aggregate encryption on the computation result according to a first public key of the first device and a second public key of the second device, to obtain an encrypted result and transmit the encrypted result to the first device and the second device, so that the first device and the second device perform aggregate decryption on the encrypted result to obtain the computation result.

19. A data processing apparatus, deployed in a first device, comprising:
a transmitting module, configured to transmit a computation task request to an agent component, the computation task request comprising an executable file and a first data identifier of first encrypted service data, the executable file being used for executing a computing operation on first service data in a second device, the first encrypted service data being obtained according to the first service data, and the agent component running in a trusted execution environment comprised in a third device and being configured to obtain the first encrypted service data from the second device according to the first data identifier, and decrypt the first encrypted service data to obtain the first service data;
a receiving module, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module, configured to perform aggregate decryption on the encrypted result with the second device to obtain the computation result.

20. A data processing apparatus, deployed in a second device, comprising:
a transmitting module, configured to transmit, according to a first data identifier carried in a computation task request, first encrypted service data to an agent component, the computation task request being transmitted from a first device to the agent component, the computation task request comprising an executable file and the first data identifier of the first encrypted service data, the executable file being used for executing a computing operation on first service data in the second device, the first encrypted service data being obtained according to the first service data, and the agent component running in a trusted execution environment comprised in a third device and being configured to decrypt the first encrypted service data to obtain the first service data;
a receiving module, configured to receive an encrypted result from the agent component, the encrypted result being obtained by the agent component by performing aggregate encryption on a computation result according to a first public key of the first device and a second public key of the second device, and the computation result being obtained by executing a computing operation on the first service data according to the executable file via a computation task component running in the trusted execution environment; and
a decryption module, configured to perform aggregate decryption on the encrypted result with the first device to obtain the computation result.

21. A computer device, comprising a memory and a processor, the memory having a computer program stored therein, and the processor, when executing the computer program, implementing operations of the method according to any one of claims 1 to 17.

22. A computer-readable storage medium, having a computer program stored therein, the computer program, when executed by a processor, implementing operations of the method according to any one of claims 1 to 17.

23. A computer program product, comprising a computer program, the computer program, when executed by a processor, implementing operations of the method according to any one of claims 1 to 17.
